# EUROPEAN PATENT APPLICATION

(11) **EP 4 582 949 A1**
(43) Date of publication of application: **09.07.2025**
(21) Application number: 24221266.0
(22) Date of filing: 18.12.2024
(51) Int. Cl.: G06F 9/52, G06F 11/07

(54) **THREAD WATCHDOG MANAGER**

(30) Priority: 22.12.2023 US 202363614235 P; 13.02.2024 US 202418440815
(71) Applicant: Roku, Inc., San Jose, CA 95110 (US)
(72) Inventor: Woodward Jr., Donald R., Los Gatos (US)
(74) Representative: Yang, Shu

(57) **Abstract**

Hardware watchdogs are ineffective. They are not used because their use imposes a coupling of otherwise unrelated subsystems. Even when used, they often fail to reboot when one software application has failed because other software applications are keeping the hardware watchdog alive. A different approach to watching software applications in a system can address this issue. A software application creating a thread can request a thread watchdog manager to watch the thread with a designated response fidelity. The thread watchdog manager can watch different threads and ensure the threads maintain corresponding fidelities of responsiveness. A developer that is writing the software application can easily and adaptably set and change response fidelity as the developer sees fit. The thread watchdog manager can effectively watch the health of different threads and trigger a hardware watchdog reboot when a failure to meet the designated response fidelity occurs in any one of the threads.

## Description

### RELATED APPLICATIONS

This non-provisional application claims priority to and/or receives benefit from provisional application having serial number 63/614,235, titled "THREAD WATCHDOG MANAGER", and filed on December 22, 2023. The provisional application is hereby incorporated by reference in its entirety.

### TECHNICAL FIELD

This disclosure relates generally to electronic devices and systems, and more specifically, to techniques for implementing watchdogs for threads in a multi-threaded computing system.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example, and not by way of limitation, in the figures of the accompanying drawings.
Figure (FIG.) 1 depicts a block diagram of exemplary system having a thread management system and a thread watchdog manager, according to some embodiments of the disclosure.
FIG. 2 illustrates an exemplary thread management system, according to some embodiments of the disclosure.
FIG. 3 illustrates an exemplary thread watchdog manager and requests to watch threads, according to some embodiments of the disclosure.
FIG. 4 illustrates an exemplary thread watchdog manager and exemplary operations to watch threads, according to some embodiments of the disclosure.
FIG. 5 illustrates an exemplary timeline for watching a thread, according to some embodiments of the disclosure.
FIG. 6 illustrates another exemplary timeline for watching a thread, according to some embodiments of the disclosure.
FIG. 7 illustrates another exemplary timeline for watching a thread, according to some embodiments of the disclosure.
FIG. 8 depicts a flow diagram illustrating exemplary operations for requesting thread watchdog manager to watch one or more threads, according to some embodiments of the disclosure.
FIG. 9 depicts a flow diagram illustrating exemplary operations for watching one or more threads, according to some embodiments of the disclosure.
FIG. 10 depicts a flow diagram illustrating exemplary operations for watching one or more threads, according to some embodiments of the disclosure.
FIG. 11 depicts a block diagram of an exemplary computing device, according to some embodiments of the disclosure.

### DETAILED DESCRIPTION

### Overview

Electronic systems, especially consumer electronic systems and Internet-of-Things electronic systems, are ubiquitous. An electronic system may have one or more processors, one or more memories, and one or more devices (e.g., sensors, communication interface, input devices, output devices, etc.). The operations of the electronic system may be managed by an operating system. One or more applications can be implemented to manipulate the one or more devices via the operating system to perform a variety of functions. In some cases, a part of the electronic system (e.g., hardware or software) may fail or hang, causing the electronic system to malfunction. When a failure occurs, it may be desirable to reboot the electronic system (automatically without user intervention) to recover from the failure.

Some electronic systems may be equipped with hardware watchdogs. A hardware watchdog has a countdown self-destruct timer. The hardware watchdog for an electronic system can be enabled for a countdown duration, e.g., 30 seconds. If the hardware watchdog is not tickled (e.g., where the countdown is reset) by any application or other subsystem of the electronic system before the countdown timer reaches zero, expires, or times out, the hardware watchdog would force a reboot of the electronic system. If no application or other subsystem of the electronic system is able to tickle the hardware watchdog before the countdown timer expires, then something must be failing in the electronic system, and the only recourse is to reboot the electronic system.

Unfortunately, hardware watchdogs with a countdown self-destruct timer are ineffective. They are not used because their use imposes a coupling of otherwise unrelated subsystems. Even when used, they often fail to reboot when one software application has failed because other software applications are keeping the hardware watchdog alive. As electronic systems and the software implemented on the system become more complex, it becomes impractical for each application or subsystem to determine when and at what frequency the application should tickle the hardware watchdog. The complexity, ambiguity, and uncertainty in coordinating many applications and subsystems can deter developers from using the hardware watchdog all together. When there is a lack of coordination between the applications and other subsystems with tickling the hardware watchdog, the hardware watchdog can lose some if not all efficacies. For example, one application or subsystem can tickle the hardware watchdog every second to prevent the system from being rebooted while another application subsystem has failed. The hardware watchdog would fail to reboot the electronic system when one software application has failed while other software applications are keeping the hardware watchdog alive. In some situations, some application or subsystem may implement a tickling mechanism while some may ignore the hardware watchdog, which leaves those applications or subsystems uncovered.

A different approach to watching software applications in an electronic system can address this issue. Operations in some electronic systems may be organized around processing threads, or threads for short. Applications and/or subsystems can create threads, and queue tasks to be executed on the threads. Threads can be a unit that identifies a logical group of operation(s) that is being performed on the electronic system. If a failure occurs in an electronic system, the failure can be attributed to a particular thread failing to respond within a certain period of time. Rather than relying on the applications and/or subsystems to tickle a hardware watchdog, individual applications and/or subsystems can request a thread watchdog manager to watch or monitor for response fidelity of a particular thread. In other words, an application creating a thread can request the thread watchdog manager to guard, watch, or monitor the thread according to a designated response fidelity for the thread. The thread watchdog manager can ensure the thread is responsive within the designated response fidelity. Otherwise, if the thread is not responsive within the designated response fidelity, the thread watchdog manager can reboot the electronic system.

Advantageously, the thread watchdog manager can watch different threads and ensure the threads maintain corresponding response fidelities or fidelities of responsiveness. One application or subsystem does not have to be concerned with how other applications or subsystems are tickling the hardware watchdog. The thread watchdog manager can ensure each thread maintains a fidelity of responsiveness according to the thread's fidelity requirement. A developer that is writing the software application can easily and adaptably set and change response fidelity as the developer sees fit. One response fidelity value for a particular thread can be independent from other response fidelities of other threads. The developer can also watch and unwatch (e.g., stop watching) threads at times that the developer sees fit. The thread watchdog manager can effectively watch the health of different threads and trigger a hardware watchdog reboot when a failure to meet the designated response fidelity occurs in any one of the threads. The thread watchdog manager can make it easy for applications or subsystems to opt into using the watchdog mechanism, set response fidelities that are most suited for the application or subsystem, and offers complete coverage for the applications or subsystems that opted in.

### Exemplary electronic system

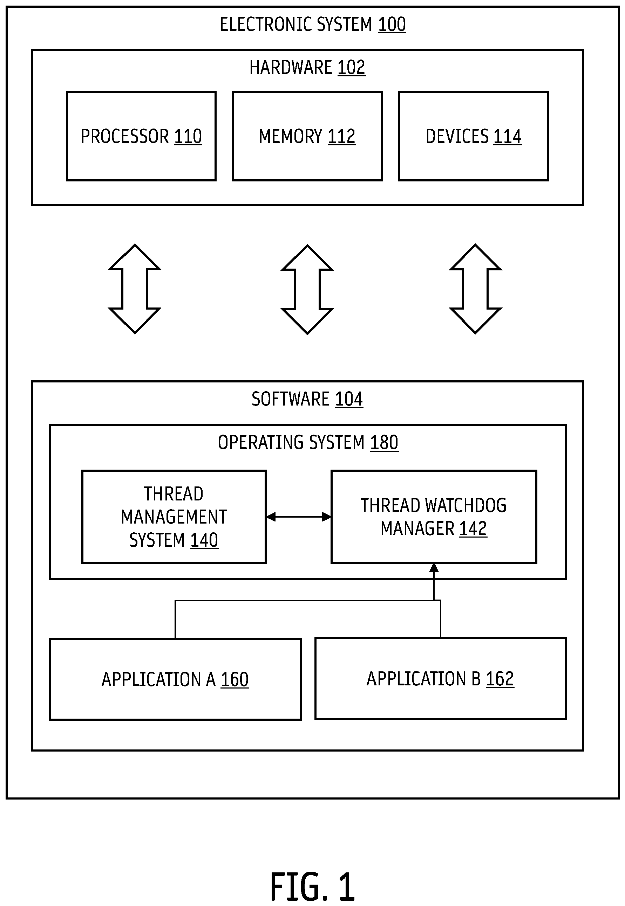

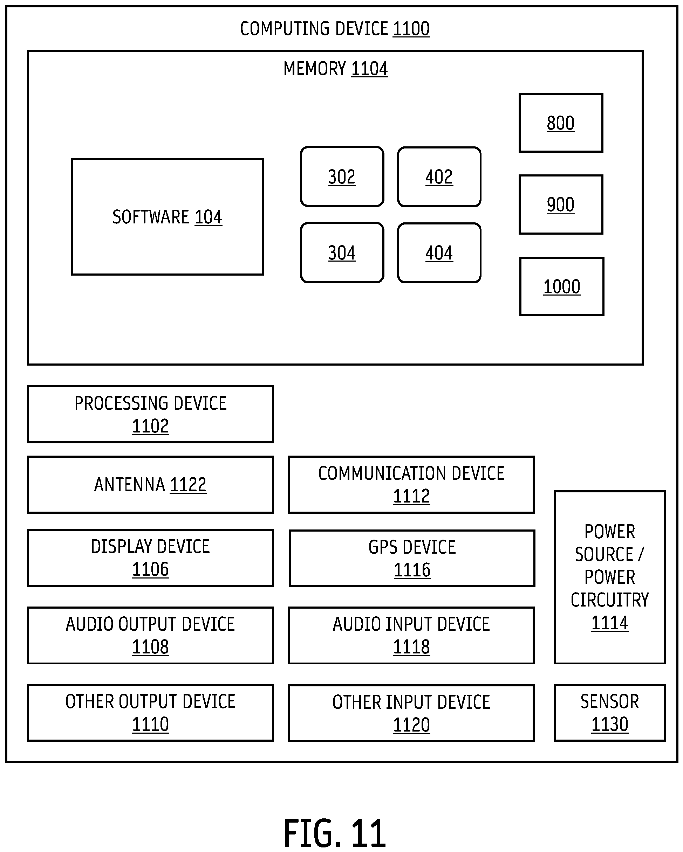

FIG. 1 depicts a block diagram of exemplary electronic system 100 having a thread management system 140 and a thread watchdog manager 142, according to some embodiments of the disclosure. Electronic system 100 may in some cases be in the form of a computing device 1100 of FIG. 11. Electronic system 100 may include hardware 102 and software 104. Hardware 102 can include physical components of electronic system 100. Hardware 102 may include processor 110, memory 112, and one or more devices 114. Examples of one or more devices 114 can include communication device, communication interface/controller, cryptography accelerator, decoder, light-emitting device, sensors, input device, output device, media card reader, identity module, etc.

Software 104 can include instructions, data, and/or programs that can be executed by a processor to perform one or more tasks and/or to manipulate one or more components in hardware 102. Software 104 can include operating system 180 and one or more applications (e.g., Application A 160 and Application B 162). Applications may be subsystems of electronic system 100. Examples of applications may include changing colors of a light bulb based on the time of day, turning on an alarm when a sensor detects unacceptable levels of indoor air pollution, capturing video footage at a front door of a home, tracking health metrics based on sensor data, counting a number of people that has walked past an area, performing inventory counting based on sensor data, monitoring equipment performance based on sensor data, monitoring atmospheric information based on sensor data, etc.

Operating system 180 may include software that manages hardware 102 and other resources in software 104. Operating system 180 can provide services for the one or more applications. Operating system 180 can act as an intermediary between an application and hardware 102. Operating system 180 can implement one or more of: process management, memory management, device management, security, and input/output management. Operating system 180 may include one or more libraries corresponding to the one or more services. A library may include a well-defined application programming interface (API). A library may include corresponding implemented functions of the API. An API may include specifications for applications to make a request or call a function. For example, a library may include an API for using a device of the one or more devices 114. An application can open a library to start a service. The application can call a function defined in the library to perform an operation using the service.

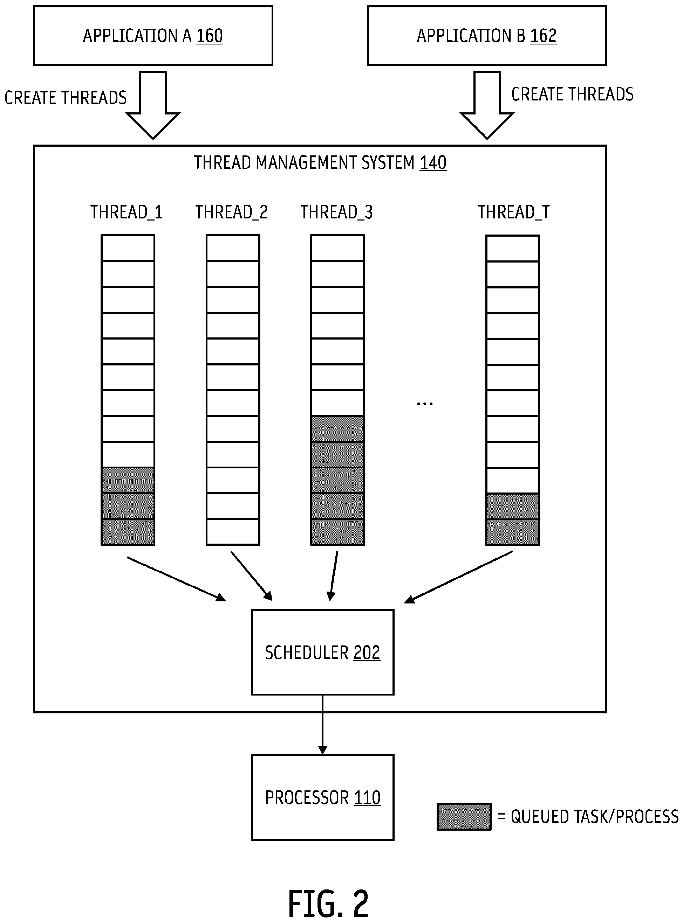

Operating system 180 may include thread management system 140. Thread management system 140 may be part of a kernel of operating system 180. Thread management system 140 may implement one or more services, such as scheduling, synchronization, and communication between threads. Exemplary operations of thread management system 140 are illustrated in FIG. 2.

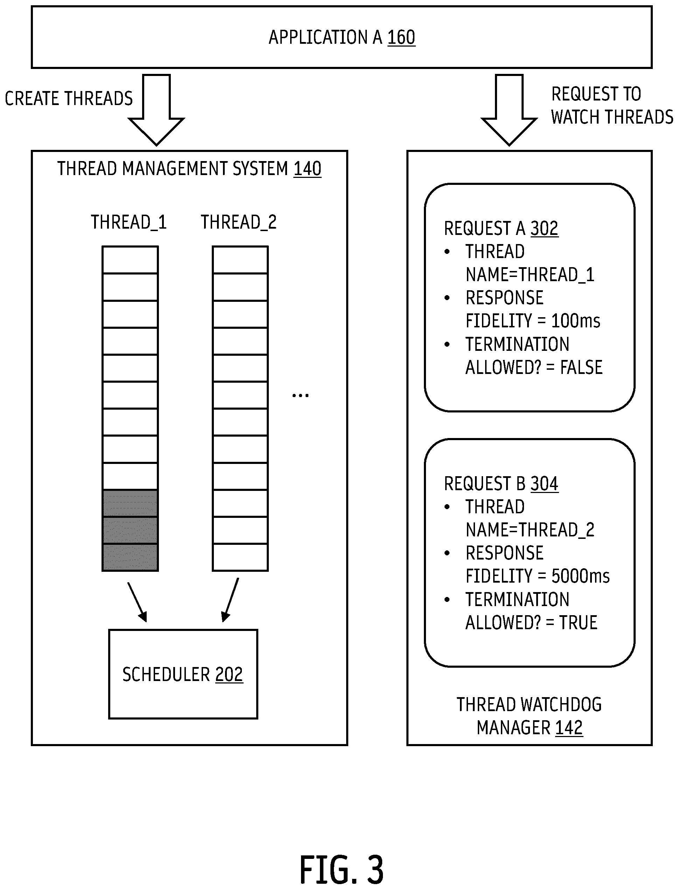

Operating system 180 may include thread watchdog manager 142. Thread watchdog manager 142 may be implemented as a library in operating system 180. Thread watchdog manager 142 may include an API having one or more defined functions. Thread watchdog manager 142 may communicate or cooperate with thread management system 140 to queue one or more tasks to threads managed by thread management system 140. Thread watchdog manager 142 may receive a request from an application (e.g., Application A 160 and/or Application B 162) to watch a specified thread in accordance with a designated response fidelity. Exemplary operations of thread watchdog manager 142 are illustrated in FIGS. 3-7.

### Exemplary thread management system

FIG. 2 illustrates an exemplary thread management system 140, according to some embodiments of the disclosure. One or more applications, e.g., Application A 160 and/or Application B 162, may create one or more threads. A processing thread or thread may represent a separate execution path within an application. A thread can be a lightweight process or process flow that thread management system 140 can schedule and run concurrently with other threads. Thread management system 140 can create and manage threads. Thread management system 140 may keep track of created threads and can be aware of whether a thread has terminated. A thread can be identified by its name (e.g., a string) or by an identifier (e.g., a numeric identifier, an alpha-numeric identifier). Threads can share the same memory and resources as the application that created the threads. Multiple threads can collaborate and work efficiently within a single application. One or more tasks and/or procedures can be queued by thread management system 140 to a thread. Threads can have states such as "ready", "executing", "running", "blocked", "idle", etc. Some threads can have priority assigned to the thread such that threads with highest priority can be scheduled first. Some threads can be allowed to terminate when one or more tasks and/or processes queued to the thread has completed execution. Some threads can be allowed to terminate when the thread has been idled for a certain period of time. Some threads are not allowed to be terminated. A thread can terminate itself. A thread, e.g., THREAD_1, can terminate another thread, e.g., THREAD_2. THREAD_1 can call a function, e.g., Terminate(THREAD_2), to terminate THREAD_2.

An application may create one or more threads for the application. An application can call a create thread (e.g., "CreateThread()", or "CreateThread(thread_name)") function to create a thread to be managed by thread management system 140. Creating a thread can start a process flow for the application, and the application can queue one or more tasks and/or processes to a particular thread. An application can call a queue task (e.g., "QueueTaskToThread(thread_name, task)") function to queue a task to a particular thread identified by "thread_name".

In at least one embodiment, a thread can be identified by one or more of: name, integer identifier, memory address, and handle.

As an illustration, thread management system 140 may have T number of threads, e.g., THREAD_1, THREAD_2, THREAD_3, ..., and THREAD_T. T may be an integer that can be equal to or greater than 0. Threads are represented as queues where tasks can be queued in a first in first out manner. Application A 160 may have created THREAD_1 and THREAD_2. Application A 160 may have queued three tasks and/or processes to THREAD_1. THREAD_2 may be idle or empty. Application B 162 may have created THREAD_3 and THREAD_T. Application B 162 may have queued five tasks and/or processes to THREAD_3. Application B 162 may have queued two tasks and/or processes to THREAD_T.

Thread management system 140 may include scheduler 202 that coordinates to have the tasks and/or processes in various threads to be executed by processor 110. Scheduler 202 can decide which thread should run or execute and which thread should wait. Scheduler 202 can manage the execution of different threads. Scheduler 202 may select a thread for execution based on a certain criterion such as the priority of the thread and/or time when a task/process in the thread was queued. Scheduler 202 can implement a scheduling algorithm to decide which thread to select for execution. In some cases, scheduler 202 may terminate a thread if the thread is allowed to terminate.

The threads as illustrated can be created to run various tasks/processes for an application. A thread can be created and may wait for a task/process to be queued to the thread. Tasks/processes can be queued to a thread and may be executed by the processor sequentially and/or in the order the tasks/processes are queued. Scheduler 202 of thread management system 140 can arrange to have the task/process executed by the processor of the electronic system. A task/process should not run forever or take an unacceptably long time to execute. When that happens, the thread is hung or considered unresponsive, and a failure may have occurred with the thread or in the electronic system.

Thread management system 140 may keep track of states of various threads. Thread management system 140 may be aware of whether a thread has been terminated. Thread management system 140 may communicate state or termination state of various threads to thread watchdog manager 142.

### Exemplary thread watchdog manager

FIG. 3 illustrates an exemplary thread watchdog manager 142 and requests to watch threads, according to some embodiments of the disclosure. In particular, FIG. 3 illustrates an example of an application, e.g., Application A 160, creating two threads and sending requests to thread watchdog manager 142 to watch the threads. It is envisioned that other applications may perform similar functionality, and thread watchdog manager 142 may accommodate requests from other applications. It is also envisioned that an application can create one or more threads (and not necessarily two). In some embodiments, Application A 160 may execute an application initialization function or threads setup routine function to create one or more threads, and individually/independently submit requests to thread watchdog manager 142 to watch the threads. The requests may identify corresponding threads to be watched by their name. The requests to watch the threads may have different parameters such as response fidelity and whether termination is allowed for the thread.

Application A 160 may create a first processing thread, e.g., THREAD_1, in an operating system of an electronic system. Application A 160 may create a second processing thread, e.g., THREAD_2, in the operating system of the electronic system. Thread management system 140 may manage the first processing thread and the second processing thread. Application A 160 may queue one or more first tasks to the first processing thread, e.g., THREAD_1. As depicted for illustration, Application A 160 may queue three tasks to THREAD_1.

An exemplary API of thread watchdog manager 142 ("ThreadWatchdogManager") can be defined as follows:

| |
|---|
| ```
TYPE_DEFINITION ThreadWatchdogManager {
       WatchThread(String threadName, TimeDuration
 responseFidelity, bool bTerminationAllowed) ; //allows an application or a
 thread to call WatchThread on thread having threadName
       UnwatchThread (String threadName ) ; //allows an application or a thread to
 call UnwatchThread on thread having threadName
 1
``` |

Another exemplary API of thread watchdog manager 142 ("ThreadWatchdogManager") can be defined as follows:

| |
|---|
| ```
TYPE_DEFINITION ThreadWatchdogManager {
``` |
| ```
       WatchThread(TimeDuration responseFidelity, bool
 bTerminationAllowed); //allows a thread to call WatchThread on itself
       UnwatchThread () ; //allows a thread to call UnwatchThread on itself
 }
``` |

The API may include a first function "WatchThread(...)". The first function, "WatchThread(...)", when called by an application such as Application A 160 from a particular thread, may instruct thread watchdog manager 142 to watch the particular thread specified in the parameter(s) of the first function, "WatchThread(...)".

The first function may include a first parameter "responseFidelity". The first parameter may correspond to a designated response fidelity of the thread. Response fidelity may correspond to a duration, e.g., a number of milliseconds. The first parameter may include a response time interval that a thread is to meet to prevent rebooting of the electronic system. The first parameter may correspond to an interval or duration the thread is to continuous meet to prevent reboot of the electronic system.

The first function may include a second parameter "bTerminationAllowed". The second parameter may correspond to an indication whether or not the thread is allowed to terminate or not. The second parameter may correspond to an instruction to thread watchdog manager 142 whether or not thread watchdog manager 142 should consider termination of the thread to be a rebootable event. The second parameter may include a Boolean flag indicating whether the thread is allowed to terminate.

The first function may include an optional third parameter "String threadName". The third parameter may correspond to a name or identifier of a target thread to be watched. The third parameter may request thread watchdog manager 142 to watch a specific thread identified by the third parameter. The third parameter may include a string. The third parameter may include a number or integer.

Application A 160 may specify a particular thread and call the first function, "WatchThread(...)", to submit a request to thread watchdog manager 142 to watch the particular thread. The request may include the first parameter, or response fidelity. The request may include the second parameter, indicating whether termination of the thread is allowed or not. The request may include the third parameter, indicating the name or identifier of the particular thread. Calling the first function, "WatchThread(...)", can request thread watchdog manager 142 to ensure the thread identified by the third parameter is responsive within the response fidelity duration specified in the first parameter "responseFidelity".

In some cases, a thread can call the first function, "WatchThread(...)" from the thread to submit a request to thread watchdog manager 142 to watch the particular thread. The request may include the first parameter, or response fidelity. The request may include the second parameter, indicating whether termination of the thread is allowed or not. Calling the first function, "WatchThread(...)", from the thread, can request thread watchdog manager 142 to ensure the thread is responsive within the response fidelity duration specified in the first parameter "responseFidelity".

In some cases, a first thread can call the first function, "WatchThread(...)"to submit a request to thread watchdog manager 142 to watch a second, different thread. The request may include the first parameter, or response fidelity. The request may include the second parameter, indicating whether termination of the thread is allowed or not. The request may include the third parameter, identifying a name or identifier of the second thread. Calling the first function, "WatchThread(...)", by the first thread, can request thread watchdog manager 142 to ensure the second is responsive within the response fidelity duration specified in the first parameter "responseFidelity".

As depicted, thread watchdog manager 142 received request A 302 to watch the first thread (e.g., request A 302 has the parameter thread name = THREAD_1). Request A 302 may include a first response fidelity (e.g., request A 302 has the parameter response fidelity = 100ms). Request A 302 may include a Boolean flag indicating whether the first thread is allowed to terminate (e.g., request A 302 has the parameter termination allowed? = FALSE, indicating that the first thread is not allowed to terminate). Thread watchdog manager 142 may reboot the electronic system if the first thread (e.g., THREAD_1) fails to meet the first response fidelity (e.g., response fidelity = 100ms). In other words, thread watchdog manager 142 may implement a process (e.g., one or more operations) to monitor or watch the responsiveness of the first thread (e.g., THREAD_1). If the responsiveness of the first thread fails to meet the first response fidelity (e.g., if the first processing thread fails to respond after a certain period of time has expired), thread watchdog manager 142 may reboot the electronic system. Application A 160 may queue one or more tasks to the first thread (e.g., THREAD_1) for processing and perform functions as part of the normal course of operations of Application A 160.

As depicted, thread watchdog manager 142 received request B 304 to watch the second thread (e.g., request A 302 has the parameter thread name = THREAD_2). Request B 304 may include a second response fidelity (e.g., request A 302 has the parameter response fidelity = 5000ms). Second response fidelity may be different from the first response fidelity in request A 302. Advantageously, Application A 160 can set different response fidelities for different threads. Request B 304 may include a Boolean flag indicating whether the second thread is allowed to terminate (e.g., request A 302 has the parameter termination allowed? = true, indicating that the second thread is allowed to terminate). Thread watchdog manager 142 may reboot the electronic system if the second thread (e.g., THREAD_2) fails to meet the second response fidelity (e.g., response fidelity = 100ms). In other words, thread watchdog manager 142 may implement a process (e.g., one or more operations) to monitor or watch the responsiveness of the second thread (e.g., THREAD_2). If the responsiveness of the second thread fails to meet the second response fidelity (e.g., if the second processing thread fails to respond after a certain period of time has expired), thread watchdog manager 142 may reboot the electronic system. Application A 160 may queue one or more tasks to the second thread (e.g., THREAD_2) for processing and perform functions as part of the normal course of operations of Application A 160.

The API may include a second function "UnwatchThread(...)". The second function, "UnwatchThread(...)", when called by an application such as Application A 160, may instruct thread watchdog manager 142 to stop or cease watching the particular thread. The second function may include a first parameter, indicating the name or identifier of the particular thread to unwatch. Calling second function, "UnwatchThread(...)", may cause thread watchdog manager 142 to stop ensuring a previously specified response fidelity to be met by the thread identified by the first parameter. Calling second function, "UnwatchThread(...)", on a thread that is not being currently watched may have no effect on the thread.

In some cases, a thread can call the second function, "UnwatchThread(...)" from the thread to instruct thread watchdog manager 142 to stop or cease watching the thread. Calling second function, "UnwatchThread(...)", may cause thread watchdog manager 142 to stop ensuring a previously specified response fidelity to be met by the thread calling the second function. Calling second function, "UnwatchThread(...)", by a thread that is not being currently watched may have no effect on the thread.

In some cases, a first thread can call the second function, "UnwatchThread(...)" to instruct thread watchdog manager 142 to stop or cease watching a second, different thread. The request may include the first parameter, identifying a name or identifier of the second thread. Calling second function, "UnwatchThread(...)", may cause thread watchdog manager 142 to stop ensuring a previously specified response fidelity to be met by the second thread. Calling second function, "UnwatchThread(...)", specifying the second thread that is not being currently watched may have no effect on the second thread.

Application A 160 may submit a request to thread watchdog manager 142 to cease watching the first thread (e.g., THREAD_1). For example, Application A 160 may call a function, UnwatchThread(THREAD_1) to request thread watchdog manager 142 to cease watching THREAD_1.

If desired, Application A 160 can change or adapt the response fidelity for the first thread, e.g., based on characteristics of tasks/processes that Application A 160 is queuing to the first thread. Application A 160 may specify a the first thread and call the first function, "WatchThread(...)", to submit a further request to thread watchdog manager 142 to watch the particular thread. The further request can include a response fidelity, e.g., a response fidelity that is different from the response fidelity in a previous request to thread watchdog manager 142 to watch the first thread. Application A 160 may queue one or more further tasks to the first thread (e.g., THREAD_1) for processing and perform additional functions as part of the normal course of operations of Application A 160.

Application A 160 may execute the following instructions to use thread watchdog manager 142, create a thread, and submit a request to thread watchdog manager 142 to watch the thread:

| |
|---|
| ```
 > Call OpenLibrary function to start ThreadWatchdogManager;
 > Call CreateThread function to create Thread_1;
 > Call WatchThread(THREAD_1, Time_Milliseconds (100), FALSE)
 function to watch THREAD_1;
       
``` |

Application A 160 may execute the following instructions to unwatch a thread, and submit a further request to thread watchdog manager 142 to watch the thread, e.g., according to a different response fidelity:

| |
|---|
| ```
 > Call UnwatchThread(THREAD_1) function to unwatch THREAD_1;
 > Call WatchThread(THREAD_1, Time_Milliseconds (500), FALSE) to
 watch THREAD_1
``` |

Application A 160 may execute the following instructions to create another thread, and submit a request to thread watchdog manager 142 to watch the other thread:

| |
|---|
| ```
 > Call CreateThread function to create THREAD_2;
 > Call WatchThread(THREAD_2, Time_Milliseconds(5000), TRUE)
 function to watch THREAD_2;
``` |

In some embodiments, an application, such as Application A 160, can implement an application initialization function and/or a startup routine. The application may in some cases implement a routine that setups threads and different response fidelities for various threads. The function or routine can include operations to create one or more threads, which may be identified by corresponding thread names or thread identifiers. The function or routine may include operations to submit individual/separate requests to thread watchdog manager 142 to watch the corresponding threads. The function or routine may serve as a convenient setup routine for the application to ensure that various created threads are watched with appropriately set response fidelities. For example, the function or routine may include the following operations:

| |
|---|
| ```
 > Call OpenLibrary function to start ThreadWatchdogManager;
 > Call CreateThread function to create Thread_1;
 > Call WatchThread(THREAD_1, Time_Milliseconds (100), FALSE)
 function to watch THREAD_1;
 > Call CreateThread function to create THREAD_2;
 > Call WatchThread(THREAD_2, Time_Milliseconds(5000), TRUE)
 function to watch THREAD_2;
``` |

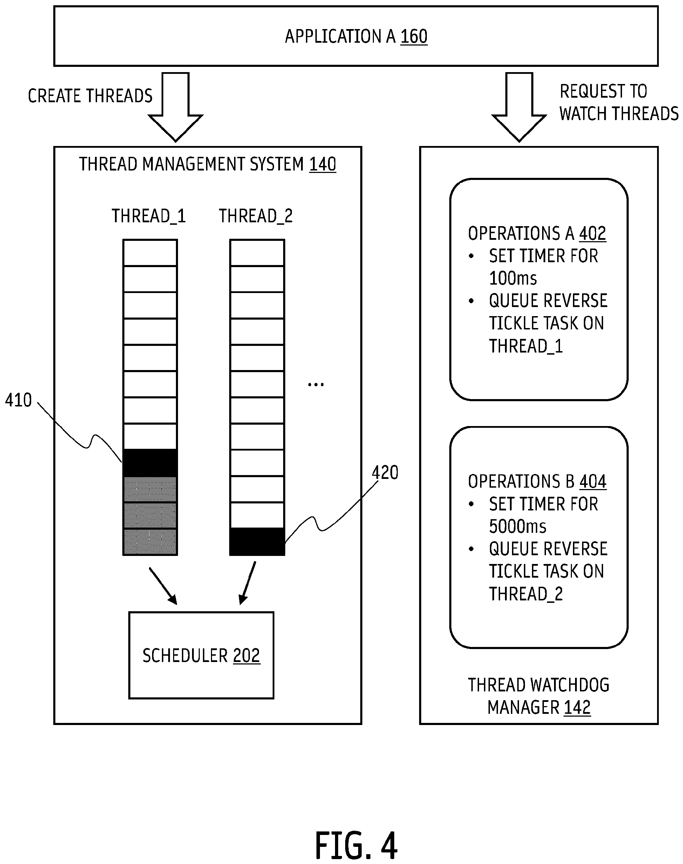

FIG. 4 illustrates an exemplary thread watchdog manager 142 and exemplary operations to watch threads, according to some embodiments of the disclosure. Operations, e.g., operations A 402, for watching the first thread, e.g., THREAD_1 in response to request A 302 of FIG. 3 are illustrated. Operations, e.g., operations B 404, for watching the second thread, e.g., THREAD_2 in response to request B 304 of FIG. 3 are illustrated.

Thread watchdog manager 142 leverages thread management system 140 to monitor or watch responsiveness of threads. Thread watchdog manager 142 may utilize a timer, such as a loop timer or a repeat timer, to repeatedly check the thread being watched. A timer can be set to have an expiration time according to the designated response fidelity. The timer can countdown from the expiration time until the timer reaches 0, which indicates the timer has expired. The timer can be set to perform a specified timer action when the timer expires. The timer action can be set to trigger a hardware watchdog to reboot the electronic system. When the timer expires, the electronic system is rebooted, e.g., by a hardware watchdog. The timer action can be set to perform a different action that does not involve a reboot of the electronic system upon expiration. For example, the timer action can be set to queue a reverse tickle task to the thread being watched (e.g., at the beginning of the next countdown). Upon expiration of the timer, the timer may queue a reverse tickle task according to the timer action. The timer may loop to countdown from the expiration time until the timer reaches 0.

In some cases, thread watchdog manager 142 may use a timer and keep track of thread fidelity data about a particular thread. Thread watchdog manager 142 may store and/or maintain a thread fidelity data structure having on or more of the following variables:

| |
|---|
| ```
Fidelity.hThread //name of thread
 Fidelity.requiredFidelity //duration or time period that corresponds to designated
 response fidelity
 Fidelity.queueTime //time at which the reverse tickle task was queued to the thread
 Fidelity.responseTime //time at which the reverse tickle task is executed
``` |

Using the loop timer, thread watchdog manager 142 may queue a reverse tickle task to the thread, e.g., at a cadence that corresponds to the designated response fidelity. The reverse tickle task can serve to check whether the thread is responsive or not. Suppose the reverse tickle task queued to the thread gets executed by the processor within a period of time from the time that the reverse tickle task is queued. Thread watchdog manager 142 would consider the thread is responsive and meets the response fidelity requirement for the thread. Suppose the reverse tickle task queued to the thread gets executed by the processor within a period of time from the time that the reverse tickle task is queued, and/or the timer expires before the reverse tickle task is executed. Thread watchdog manager 142 would consider the thread to not meet the response fidelity and would cause a hardware watchdog to reboot the electronic system.

Thread watchdog manager 142 may implement following operations, e.g., in response to receiving a request to watch a thread with one or more specified parameters, to watch a thread using one or more of the following functions: (1) watch thread ("WatchThread"), (2) queue next reverse tickle task to thread ("QueueNextReverseTickleTask"), (3) conditional reboot ("CondtionalReboot"), and (4) reverse tickle task ("ReverseTickleTask"):

| |
|---|
| WatchThread { |
| Set Timer Expiration Time according to Fidelity.requiredFidelity; //**sets loop timer** |
| Perform QueueNextReverseTickleTask; |
| } |
| QueueNextReverseTickleTask { |
| Set Timer Action to ConditionalReboot; //**cause hardware watchdog to reboot system if timer action is not reset or set to a different action** |
| Queue ReverseTickleTask to thread; |
| } |
| ConditionalReboot { |
| If bTerminationAllowed = TRUE and thread is Terminated: Turn Off Timer; //**do not treat termination as a rebootable event** |
| Else: Reboot; //**cause hardware watchdog to reboot system** |
| } |
| ReverseTickleTask { |
| Set Timer Action to QueueNextReverseTickleTask; //**resets the action to queue another reverse tickle task** |
| } |

Thread watchdog manager 142 may begin by calling WatchThread function. Thread watchdog manager 142 may set a loop timer based on the designated response fidelity ("Fidelity.responseTime") for the thread. Thread watchdog manager 142 may perform QueueNextReverseTickleTask.

Within the function QueueNextReverseTickleTask, the timer action of the loop timer is set to reboot or conditional reboot ("ConditionalReboot"), so that when the loop timer expires, reboot or conditional reboot is performed unless the loop timer action is reset before the loop timer expires. In addition, within the function QueueNextReverseTickleTask, a reverse tickle task ("ReverseTickleTask") is queued to the thread.

When the reverse tickle task executes, the timer action of the loop timer is set or reset to perform QueueNextReverseTickleTask instead of reboot or conditional reboot. Resetting the timer action effectively prevents reboot of the system because the reverse tickle task is executed and schedules the loop timer to queue another reverse tickle task upon expiration.

If the reverse tickle task does not execute before the loop timer expires, reboot or conditional reboot ("ConditionalReboot") is triggered by the loop timer. The loop timer may be turned off if the thread is already terminated and the thread is allowed to be terminated. Otherwise, the loop timer expiration triggers a reboot of the electronic system.

Thread watchdog manager 142 may receive a first request, e.g., request A 302 of FIG. 3, to watch a first processing thread, e.g., THREAD_1, in an operating system of an electronic system. The first request can include a first response fidelity, e.g., response fidelity = 100ms. Thread watchdog manager 142 may set a first loop timer to expire at a first expiration time. For example, the first loop timer may repeatedly countdown from 100ms to zero and perform a timer action upon expiration. Thread watchdog manager 142 may set the first loop timer's timer action to cause a hardware watchdog to execute a reboot of the electronic system upon expiration. Thread watchdog manager 142 may queue a first reverse tickle task 410 to the first processing thread, e.g., THREAD_1. The first reverse tickle task 410, when executed by a processor of the electronic system, can reset the first loop timer to queue a second reverse tickle task (not shown) upon expiration instead of executing the reboot or conditional reboot. When the first loop timer expires, thread watchdog manager 142 may reset the timer action to reboot or conditional reboot and queue the second reverse tickle task to start the countdown again. In response to the first loop timer expiring at the first expiration time before the first reverse tickle task 410 executes, thread watchdog manager 142 may cause a hardware watchdog to reboot the electronic system. In response to the first loop timer expiring at the first expiration time after the first reverse tickle task 410 executes, thread watchdog manager 142 may queue the second reverse tickle task to the first processing thread and resets the first loop timer to execute the reboot or conditional reboot upon a next expiration.

Thread watchdog manager 142 may receive a second request, e.g., request B 304 of FIG. 3, to watch a second processing thread, e.g., THREAD_2, in the operating system of the electronic system. The second request can include a second response fidelity, e.g., response fidelity = 5000ms. Thread watchdog manager 142 may set a second loop timer to expire at a second expiration time. For example, the second loop timer may repeatedly countdown from 5000ms to zero and perform a timer action upon expiration. Thread watchdog manager 142 may set the second loop timer's timer action to cause a hardware watchdog to execute a reboot of the electronic system upon expiration. Thread watchdog manager 142 may queue a second reverse tickle task 420 to the second processing thread, e.g., THREAD_2. The second reverse tickle task 420, when executed by a processor of the electronic system, can resets the second loop timer to queue a fourth reverse tickle task (not shown) upon expiration instead of executing the reboot or conditional reboot. When the second loop timer expires, thread watchdog manager 142 may reset the timer action to reboot or conditional reboot and queue the fourth reverse tickle task to start the countdown again. In response to the second loop timer expiring at the second expiration time before the second reverse tickle task 420 executes, thread watchdog manager 142 may cause a hardware watchdog to reboot the electronic system. In response to the second loop timer expiring at the second expiration time after the second reverse tickle task 420 executes, thread watchdog manager 142 may queue the fourth reverse tickle task to the second processing thread and resets the second loop timer to execute the reboot or conditional reboot upon next expiration.

The loop timer may either queue another reverse tickle task every expiration time period or cause a hardware watchdog to reboot the system if it is determined that the reverse tickle task was not executed. It is possible, in some cases that by the time the loop timer expires, the thread may have already been hung for a period that is longer than the expiration time of the timer. For this reason, the expiration time of the timer may be set to be shorter than the designated response fidelity. In some other cases, the expiration time of the timer may be set to be the same as the designated response fidelity if such cases are considered tolerable.

Thread watchdog manager 142 may receive a request to cease watching a processing thread (e.g., the application may call UnwatchThread(...)). Thread watchdog manager 142 may turn off (or kill) the corresponding loop timer for that processing thread.

In some embodiments, the request may include a Boolean flag indicating whether the thread (e.g., THREAD_2) is allowed to terminate. For example, termination allowed? = TRUE. Thread watchdog manager 142 may perform a conditional reboot ("ConditionalReboot"). Thread watchdog manager 142 may, in response to the loop timer expiring at the expiration time after the reverse tickle task executes and after the thread has terminated, turn off the loop timer. Thread watchdog manager 142 may not consider the termination of the thread as a rebootable event and may turn off the loop timer. The terminated thread is effectively unwatched or no longer being watched since the thread is allowed to terminate.

In some embodiments, the request may include a Boolean flag indicating whether the thread (e.g., THREAD_1) is allowed to terminate. For example, termination allowed? = FALSE. Thread watchdog manager 142 may perform a conditional reboot ("ConditionalReboot"). Thread watchdog manager 142 may, in response to the loop timer expiring at the expiration time after the reverse tickle task executes and after the first processing thread has terminated, reboot the electronic system. Thread watchdog manager 142 may consider the termination of the thread as a rebootable event and may proceed to reboot the electronic system.

In some embodiments, thread watchdog manager 142 may implement following operations, e.g., in response to receiving a request to watch a thread with one or more specified parameters, to watch a thread using one or more of the following functions: (1) watch thread ("WatchThread"), (2) queue next reverse tickle task to thread ("QueueNextReverseTickleTask"), (3) conditional reboot ("CondtionalReboot"), and (4) reverse tickle task ("ReverseTickleTask"):

| |
|---|
| WatchThread { |
| Set Timer Expiration Time according to Fidelity.requiredFidelity; |
| Set Timer Action to reboot; //**cause hardware watchdog to reboot system if timer action is not reset or set to a different action** |
| Queue ReverseTickleTask to thread; |
| } |
| QueueNextReverseTickleTask { |
| Set Fidelity.queueTime to kernel time; //**kernel time may correspond to time in nanoseconds since boot; records when reverse tickle task is being queued** |
| Set Timer Action to ConditionalReboot; //**reboot if timer action is not reset or set to a different action** |
| Queue ReverseTickleTask to thread; |
| } |
| ConditionalReboot { |
| If bTerminationAllowed = TRUE and thread is Terminated: Turn |
| Off Time r; //**do not treat termination as a rebootable event** |
| Else: Reboot; //**cause hardware watchdog to reboot system** |
| } |
| ReverseTickleTask { |
| Set Fidelity.responseTime to kernel time; |
| Subtract Fidelity.responseTime by Fidelity.queueTime to get Duration; |
| If Duration > Fidelity.requiredFidelity: Reboot; //**thread is not terminated and system has not yet been rebooted for some reason** |
| Else or Duration <= Fidelity.requiredFidelity: Set Timer Action to QueueNextReverseTickleTask; //**resets the action to queue another reverse tickle task** |
| } |

Thread watchdog manager 142 may begin by calling WatchThread function. Thread watchdog manager 142 may set a loop timer based on the designated response fidelity ("Fidelity.responseTime") for the thread. Thread watchdog manager 142 may perform QueueNextReverseTickleTask.

Within the function QueueNextReverseTickleTask, the timer action of the loop timer is set to reboot or conditional reboot ("ConditionalReboot"), so that when the loop timer expires, reboot or conditional reboot is performed unless the loop timer action is reset before the loop timer expires. In addition, within the function QueueNextReverseTickleTask, the queue time ("Fidelity.queueTime") is set to kernel time. Moreover, within the function QueueNextReverseTickleTask, a reverse tickle task ("ReverseTickleTask") is queued to the thread.

When the reverse tickle task executes, the reverse tickle task may set the response time ("Fidelity.responseTime") to kernel time. The reverse tickle task may determine a duration based on the queue time ("Fidelity.queueTime") and the response time
("Fidelity.responseTime"). For example, the reverse tickle task may subtract the response time by the queue time. The reverse tickle task then performs an action conditioned on the duration. If the duration is greater than the designated response fidelity ("Fidelity.responseTime"), then the reverse tickle task may trigger a hardware watchdog reboot of the system. Else (or if the duration is less than the designated response fidelity), the reverse tickle task sets or resets the timer action of the loop timer to perform QueueNextReverseTickleTask instead of reboot or conditional reboot. Resetting the timer action effectively prevents reboot of the system because the reverse tickle task is executed and schedules the loop timer to queue another reverse tickle task upon expiration.

If the reverse tickle task does not execute before the loop timer expires, reboot or conditional reboot ("ConditionalReboot") is triggered by the loop timer. The loop timer may be turned off if the thread is already terminated and the thread is allowed to be terminated. Otherwise, the loop timer expiration triggers a reboot of the electronic system.

Thread watchdog manager 142 may receive a first request (e.g., request A 302 of FIG. 3) to watch a first processing thread (e.g., THREAD_1) in an operating system of an electronic system. The first request comprises a first response fidelity, e.g., e.g., response fidelity = 100ms. Thread watchdog manager 142 may set a first loop timer to expire at a first expiration time corresponding to the first response fidelity, and to cause a hardware watchdog to execute a reboot of the electronic system upon expiration. Thread watchdog manager 142 may queue a first reverse tickle task 410 to the first processing thread. The first reverse tickle task 410 is executable by a processor of the electronic system. In some cases, thread watchdog manager 142 may set a queue time to a kernel time of the operating system of the electronic system. For example, thread watchdog manager 142 may set Fidelity.queueTime = kernel time.

Thread watchdog manager 142 may, in response to the first loop timer expiring at the first expiration time before the first reverse tickle task 410 executes, reboot the electronic system. Thread watchdog manager 142 may call reboot or conditional reboot function ("ConditionalReboot").

Thread watchdog manager 142 may, in response to the first loop timer expiring at the first expiration time after the first reverse tickle task executes, queue a second reverse tickle task (not shown) to the first processing thread (e.g., THREAD_1) and reset the first loop timer to execute the reboot upon next expiration. The execution of the first reverse tickle task had reset the timer action of the first loop timer to, upon expiration, perform
QueueNextReverseTickleTask.

In response to the first loop timer expiring at the first expiration time before the first reverse tickle task executes, the first loop timer may trigger rebooting of the electronic system by a hardware watchdog.

In some cases, the reverse tickle task may include time tracking operations. Executing the first reverse tickle task 410 may include setting a response time to a further kernel time of the operating system of the electronic system. Executing the first reverse tickle task 410 may determine a duration based on the response time and the queue time. Executing the first reverse tickle task 410 may include rebooting the electronic system, in response to determining that the duration is greater than the first response fidelity. Executing the first reverse tickle task 410 may include resetting the first loop timer to queue a second reverse tickle task upon expiration instead of causing a hardware watchdog to execute the reboot, in response to determining the duration is less than the first response fidelity.

Similar operations can be performed for other requests, e.g., request B 304 of FIG. 3.

### Implementation considerations for the thread watchdog manager

One parameter for the watch thread function, "WatchThread(...)", allows the request to specify whether a thread is allowed to terminate or not, or to specify whether termination of a thread is rebootable event or not. In some cases, a thread may terminate itself upon completion of one or more tasks queued to the thread. In some cases, a first thread may terminate a second thread. If a request to watch the second thread specifies that the second thread is not allowed to terminate (e.g., request has the parameter termination allowed? = false), the first thread terminating the second thread may (accidentally) cause thread watchdog manager 142 to trigger a hardware watchdog reboot of the system. The first thread may call the unwatch thread function, "UnwatchThread" specifying or identifying the second thread as a parameter, before terminating the second thread so as to avoid (accidentally) causing thread watchdog manager 142 to trigger a hardware watchdog reboot of the system. Ensuring that the second thread is unwatched before terminating the second thread can in some cases be important when implementing graceful application shutdown and unloading behavior.

In some embodiments, thread management system 140 may inform thread watchdog manager 142 when one or more threads terminate. To implement conditional reboot, thread watchdog manager 142 may keep track of whether threads that are allowed to terminate have been terminated, and unwatch the threads accordingly (since termination is not considered to be a rebootable event and the terminated thread no longer has to be watched). In some cases, thread watchdog manager 142 may keep track of whether threads that are not allowed to terminate have been terminated and cause a hardware watchdog to reboot the system if a thread that is not allowed to terminate was terminated (since termination is considered to be a rebootable event and triggering a reboot would be appropriate). Thread management system 140 may notify thread watchdog manager 142 when a thread terminated. Thread management system 140 may transmit a notification to thread watchdog manager 142 that a particular thread identified by a thread name or thread identifier has terminated. Thread watchdog manager 142 may determine whether the particular thread is allowed to terminate or not (e.g., based on the parameter provided in a request to watch the particular thread). If the particular thread was allowed to terminate and was being watched by thread watchdog manager 142 (e.g., no application or thread has requested the particular thread to be unwatched), thread watchdog manager 142 may unwatch the particular thread (e.g., reset the loop timer on the particular thread). If the particular thread was not allowed to terminate and was being watched by thread watchdog manager 142 (e.g., no application or thread has requested the particular thread to be unwatched), thread watchdog manager 142 may trigger a hardware watchdog to reboot the system.

In some cases, thread watchdog manager 142 may implement an optimization that does not involve separate countdowns for different loop timers which were setup for different threads having different response fidelities. It is possible that thread watchdog manager 142 may be watching a number of threads. Thread watchdog manager 142 managing independently running loop timers can incur processing overhead (e.g., processor cycles and memory utilization). The optimization may involve implementing a (single) loop timer whose expiration time may be set to a soonest/earliest/next expiring fidelity time or deadline from current time if a reboot action is not triggered. The loop timer may be able to keep track of response fidelities or deadlines (e.g., as a series of deadlines) for the execution of reverse tickle tasks queued to different threads at the same time without using separate countdowns that ticks down separately/independently.

### Exemplary timelines for watching a thread

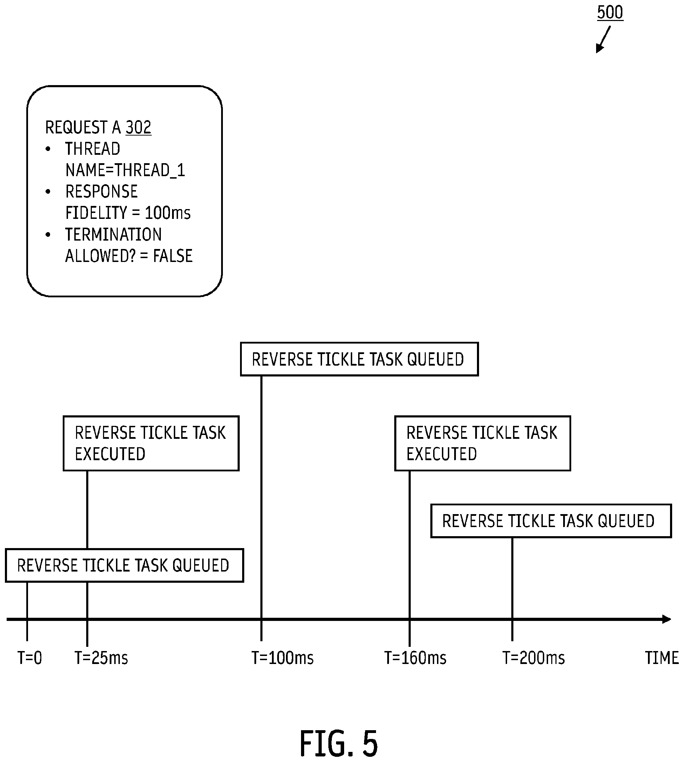

FIG. 5 illustrates an exemplary timeline 500 for watching a thread, according to some embodiments of the disclosure. Timeline 500 may represent a possible scenario when thread watchdog manager 142 of the FIGS. services request A 302 of FIG. 3. The loop timer may be set to have 100ms as the expiration time.

At T=0, thread watchdog manager 142 may queue a first reverse tickle task to the thread. The loop timer action may be set to reboot.

At T=25ms, the first reverse tickle task is executed by the processor of the electronic system. The first reverse tickle task resets the loop timer action to queue the next reverse tickle task.

At T=100ms, thread watchdog manager 142 queues, at the expiration of the loop timer, a second reverse tickle task to the thread. Loop timer action may be set to cause a hardware watchdog to reboot the system.

At T=160ms, the second reverse tickle task is executed by the processor of the electronic system. The second reverse tickle task resets the loop timer action to queue the next reverse tickle task.

At T=200ms, thread watchdog manager 142 queues, at the expiration of the loop timer, a third reverse tickle task to the thread. Loop timer action may be set to trigger a hardware watchdog reboot of the system.

The process may continue in a similar manner.

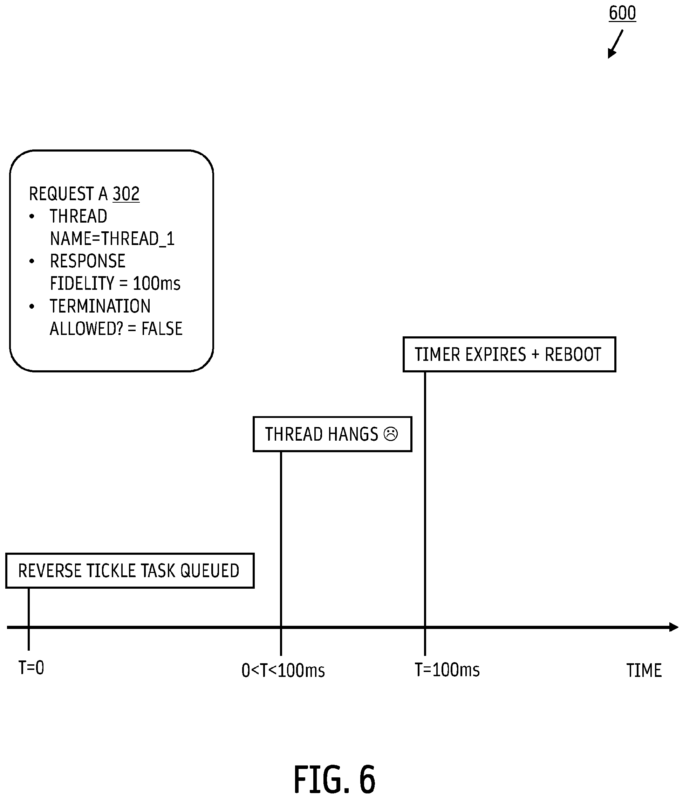

FIG. 6 illustrates another exemplary timeline 600 for watching a thread, according to some embodiments of the disclosure. Timeline 500 may represent a possible scenario when thread watchdog manager 142 of the FIGS. services request A 302 of FIG. 3. The loop timer may be set to have 100ms as the expiration time.

At T=0, thread watchdog manager 142 may queue a first reverse tickle task to the thread. Loop timer action may be set to trigger a hardware watchdog reboot of the system.

Sometime before the loop timer expires (e.g., 0<T<100ms), the thread hangs and does not execute the first reverse tickle task.

At T=100ms, the loop timer expires and triggers a hardware watchdog reboot of the electronic system.

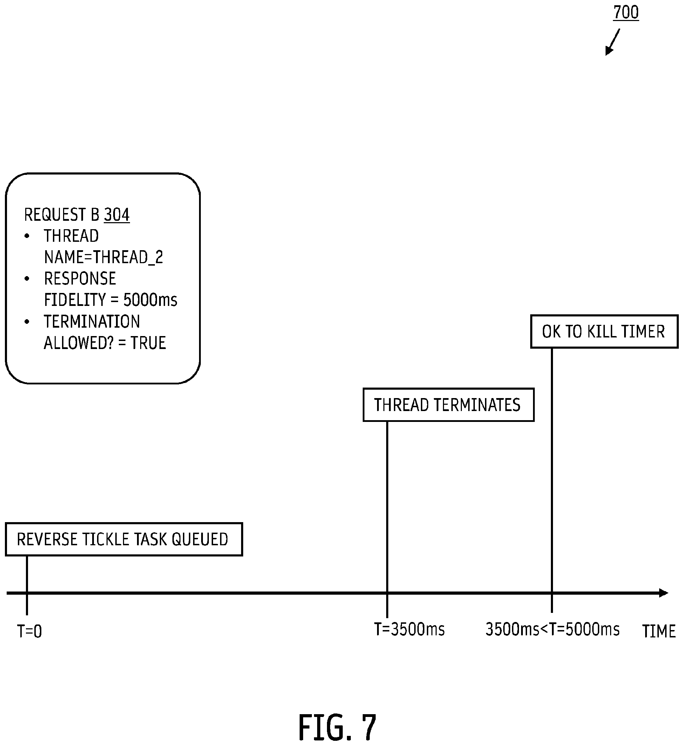

FIG. 7 illustrates another exemplary timeline 700 for watching a thread, according to some embodiments of the disclosure. Timeline 500 may represent a possible scenario when thread watchdog manager 142 of the FIGS. services request B 304 of FIG. 3. The loop timer may be set to have 5000ms as the expiration time. The fidelity of the thread has the parameter that indicates the thread is allowed to terminate.

At T=0, thread watchdog manager 142 may queue a first reverse tickle task to the thread. Loop timer action may be set to cause a hardware watchdog reboot of the system.

Sometime before the loop timer expires (e.g., T=3500ms), the thread completes other tasks and terminates (e.g., the thread may terminate upon completion of another task/process, while the first reverse tickle task is in the queue of the thread). Thread management system 140 may inform thread watchdog manager 142 that the thread has terminated.

At T=5000ms, the loop timer expires and triggers a conditional reboot. Because the thread is allowed to terminate, the termination of the thread is not considered a rebootable event. The loop timer is turned off or killed. The electronic system is not rebooted as a result.

In some cases, thread watchdog manager 142 may be notified by thread management system 140 that the thread has been terminated. Thread watchdog manager 142 may determine that the thread is allowed to terminate, and unwatch the thread by turning off the loop timer, at 3500<T=5000ms.

### Exemplary methods for watching one or more threads

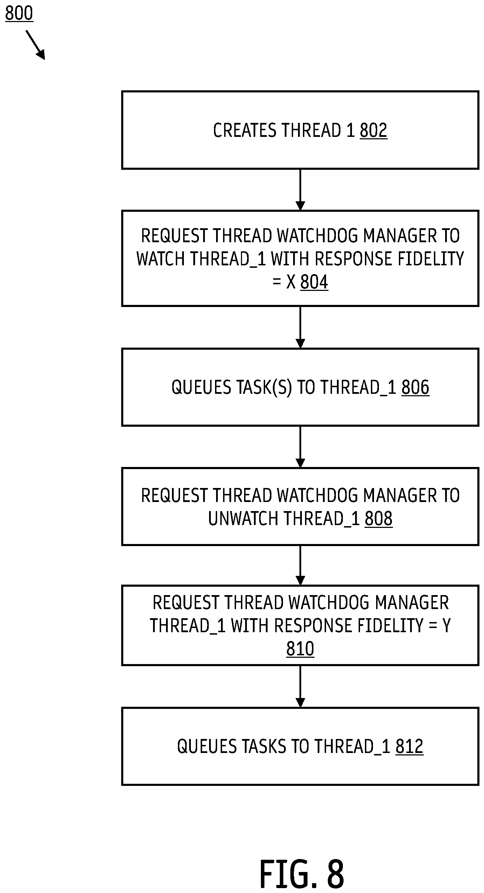

FIG. 8 depicts a flow diagram illustrating exemplary operations 800 for requesting thread watchdog manager to watch one or more threads, according to some embodiments of the disclosure. The operations may be performed by components in electronic system 100 as illustrated in FIG. 1 and in other FIGS.

In 802, an application may create a first processing thread ("THREAD_1") in an operating system of an electronic system.

In 804, the application may request a thread watchdog manager to watch the first processing thread with a response fidelity = X. The application may submit, to the thread watchdog manager, a first request to watch the first processing thread. The first request can include a first response fidelity. The thread watchdog manager may cause a hardware watchdog reboot the electronic system if the first processing thread fails to meet the first response fidelity.

In 806, the application may queue one or more first tasks to the first processing thread (e.g., in the normal course of operation of the application).

In 808, the application may request the thread watchdog manager to unwatch the first processing thread. The application may submit, to the thread watchdog manager, a second request to unwatch the first processing thread.

In 810, the application may request the thread watchdog manager to watch the first processing thread with different response fidelity = Y. The application may submit, to the thread watchdog manager, a third request to watch the first processing thread. The third request can include a second response fidelity that may be different from the first response fidelity. The thread watchdog manager may cause a hardware watchdog reboot the electronic system if the first processing thread fails to meet the second response fidelity.

In 812, tasks may be queued to the first processing thread.

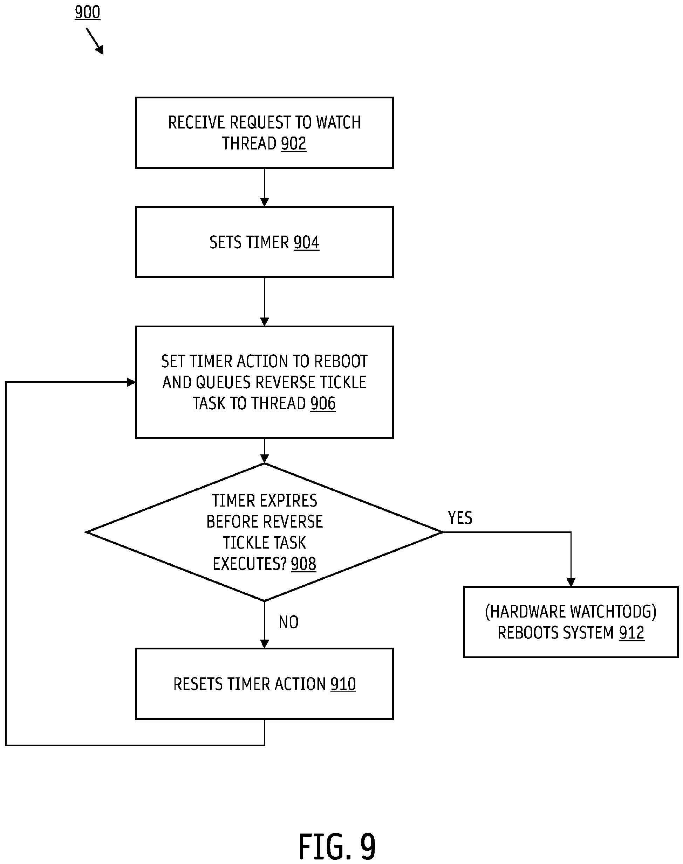

FIG. 9 depicts a flow diagram illustrating exemplary operations 900 for watching one or more threads, according to some embodiments of the disclosure. The operations may be performed by components in electronic system 100 as illustrated in FIG. 1 and in other FIGS.

In 902, a thread watchdog manager can receive a first request to watch a first processing thread in an operating system of an electronic system. The first request can include a first response fidelity.

In 904, the thread watchdog manager can set a first loop timer to expire at a first expiration time.

In 906, the thread watchdog manager can set the first loop timer to execute a hardware watchdog reboot of the electronic system upon expiration. The thread watchdog manager may queue a first reverse tickle task to the first processing thread. The first reverse tickle task, when executed by a processor of the electronic system, can reset the first loop timer to queue a second reverse tickle task upon expiration instead of executing the hardware watchdog reboot.

In 908, the first loop timer keeps ticking, and waits to see if the loop timer expires before the first reverse tickle task executes.

If YES is determined in 908, the first loop timer triggers rebooting of the electronic system by a hardware watchdog in 912, in response to the first loop timer expiring at the first expiration time before the first reverse tickle task executes.

At some point before the first loop timer expires, the first reverse tickle task is executed, and can reset the timer action of the first loop timer to queue a second reverse tickle task in 910. This also means NO is determined in 908 because the first reverse tickle task is executed.

Upon expiration of the first loop timer and if the timer action is set to queue the second reverse tickle task (as a result of the execution of the first reverse tickle task), the thread watchdog manager may loop back to 906. The thread watchdog manager may queue the second reverse tickle task to the first processing thread and resets the first loop timer action to execute the hardware watchdog reboot upon next expiration. The thread watchdog manager may perform queuing of the next reverse tickle task upon expiration of the first loop timer, in response to the first loop timer expiring at the first expiration time after the first reverse tickle task executes.

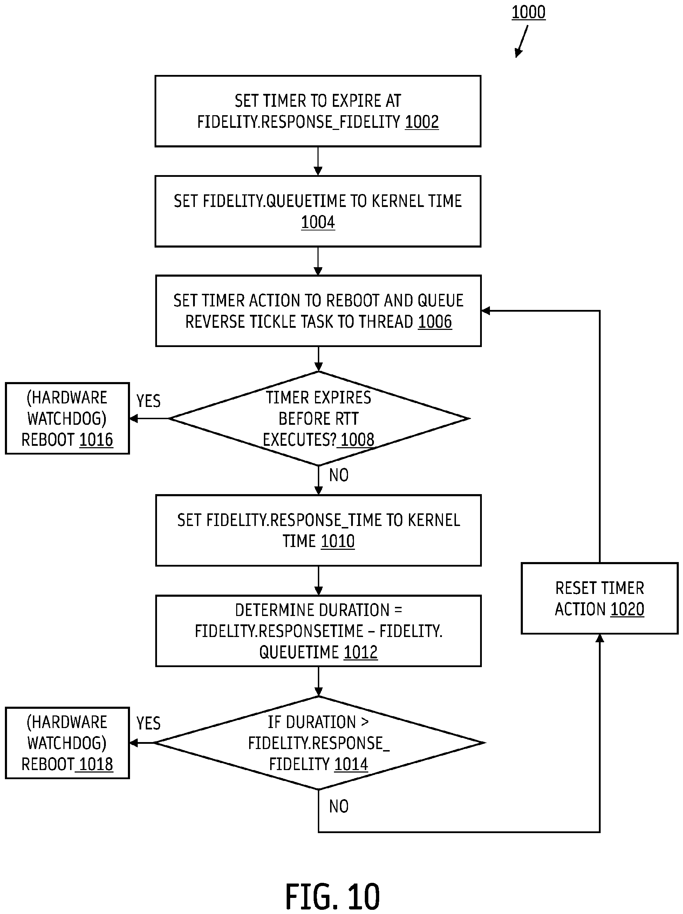

FIG. 10 depicts a flow diagram illustrating exemplary operations 1000 for watching one or more threads, according to some embodiments of the disclosure. The operations may be performed by components in electronic system 100 as illustrated in FIG. 1 and in other FIGS. A thread watchdog manager may receive a first request to watch a first processing thread in an operating system of an electronic system. The first request comprises a first response fidelity (Fidelity.responseFidelity).

In 1002, the thread watchdog manager may set a first loop timer to expire at a first expiration time corresponding to the first response fidelity (Fidelity.responseFidelity).

In 1004, a queue time (Fidelity.queueTime) may be set to a kernel time of the operating system of the electronic system.

In 1006, the thread watchdog manager may set the first loop timer's action to execute a hardware watchdog reboot of the electronic system upon expiration. The thread watchdog manager may queue a first reverse tickle task to the first processing thread, wherein the first reverse tickle task is executable by a processor of the electronic system.

In 1008, the first loop timer keeps ticking, and waits to see if the loop timer expires before the first reverse tickle task executes.

If YES is determined in 1008, the first loop timer triggers rebooting of the electronic system by a hardware watchdog in 1016, in response to the first loop timer expiring at the first expiration time before the first reverse tickle task executes.

At some point before the first loop timer expires, the first reverse tickle task is executed. In 1010, the first reverse tickle task can set a response time (Fidelity.responseTime) to a further kernel time of the operating system of the electronic system. In 1012, the first reverse tickle task can determine a duration based on the response time set in 1010 and the queue time set in 1004 (e.g., via subtraction of the response time by the queue time). In 1014, the first reverse tickle task determines whether the duration is greater than the response fidelity (Fidelity.responseFidelity). If YES is determined in 1014, the first reverse tickle task may trigger a reboot of the electronic system by a hardware watchdog in 1018. If NO is determined in 1014, then the first reverse tickle task can reset the timer action of the first loop timer to queue a second reverse tickle task in 1020. This also means NO is determined in 1008 because the first reverse tickle task is executed.

Upon expiration of the first loop timer and if the timer action is set to queue the second reverse tickle task (as a result of the execution of the first reverse tickle task), the thread watchdog manager may loop back to 1006. The thread watchdog manager may queue the second reverse tickle task to the first processing thread and resets the first loop timer action to execute the hardware watchdog reboot upon next expiration. The thread watchdog manager may perform queuing of the next reverse tickle task upon expiration of the first loop timer, in response to the first loop timer expiring at the first expiration time after the first reverse tickle task executes.

Although the operations of the example method shown in and described with reference to FIGS. 8-10 are illustrated as occurring once each and in a particular order, it will be recognized that the operations may be performed in any suitable order and repeated as desired. Additionally, one or more operations may be performed in parallel. Furthermore, the operations illustrated in FIGS. 8-10 may be combined or may include more or fewer details than described.

### Example computing device

FIG. 11 depicts a block diagram of an exemplary computing device 1100, according to some embodiments of the disclosure. One or more computing devices, such as computing device 1100, may be used to implement the functionalities described with reference to the FIGS. and herein. A number of components are illustrated in the FIGS. as included in computing device 1100, but any one or more of these components may be omitted or duplicated, as suitable for the application. In some embodiments, some or all of the components included in the computing device 1100 may be attached to one or more motherboards. In some embodiments, some or all of these components are fabricated onto a single system on a chip (SoC) die. Additionally, in various embodiments, the computing device 1100 may not include one or more of the components illustrated in FIG. 11, and the computing device 1100 may include interface circuitry for coupling to the one or more components. For example, the computing device 1100 may not include a display device 1106, and may include display device interface circuitry (e.g., a connector and driver circuitry) to which a display device 1106 may be coupled. In another set of examples, the computing device 1100 may not include an audio input device 1118 or an audio output device 1108 and may include audio input or output device interface circuitry (e.g., connectors and supporting circuitry) to which an audio input device 1118 or audio output device 1108 may be coupled.

The computing device 1100 may include a processing device 1102 (e.g., one or more processing devices, one or more of the same type of processing device, one or more of different types of processing device). The processing device 1102 may include electronic circuitry that process electronic data from data storage elements (e.g., registers, memory, resistors, capacitors, quantum bit cells) to transform that electronic data into other electronic data that may be stored in registers and/or memory. Examples of processing device 1102 may include a central processing unit (CPU), a graphical processing unit (GPU), a quantum processor, a machine learning processor, an artificial intelligence processor, a neural network processor, an artificial intelligence accelerator, an application specific integrated circuit (ASIC), an analog signal processor, an analog computer, a microprocessor, a digital signal processor, a field programmable gate array (FPGA), a tensor processing unit (TPU), a data processing unit (DPU), etc.

The computing device 1100 may include a memory 1104, which may itself include one or more memory devices such as volatile memory (e.g., DRAM), nonvolatile memory (e.g., read-only memory (ROM)), high bandwidth memory (HBM), flash memory, solid state memory, and/or a hard drive. Memory 1104 includes one or more non-transitory computer-readable storage media. In some embodiments, memory 1104 may include memory that shares a die with the processing device 1102. In some embodiments, memory 1104 includes one or more non-transitory computer-readable media storing instructions executable to perform operations described with the FIGS., such as operations described with software 104 (e.g., including one or more of: operating system 180, thread management system 140, thread watchdog manager 142, Application A 160, and Application B 162), and the methods illustrated in FIGS. 2-10. Exemplary parts or modules that may be encoded as instructions and stored in memory 1104 are depicted. Memory 1104 may store instructions that encode one or more exemplary parts. The instructions stored in the one or more non-transitory computer-readable media may be executed by processing device 1102. In some embodiments, memory 1104 may store data, e.g., data structures, binary data, bits, metadata, files, blobs, etc., as described with the FIGS. and herein.

In some embodiments, the computing device 1100 may include a communication device 1112 (e.g., one or more communication devices). For example, communication device 1112 may be configured for managing wired and/or wireless communications for the transfer of data to and from the computing device 1100. The term "wireless" and its derivatives may be used to describe circuits, devices, systems, methods, techniques, communications channels, etc., that may communicate data through the use of modulated electromagnetic radiation through a nonsolid medium. The term does not imply that the associated devices do not contain any wires, although in some embodiments they might not. The communication device 1112 may implement any of a number of wireless standards or protocols, including but not limited to Institute for Electrical and Electronic Engineers (IEEE) standards including Wi-Fi (IEEE 802.10 family), IEEE 802.16 standards (e.g., IEEE 802.16-2005 Amendment), Long-Term Evolution (LTE) project along with any amendments, updates, and/or revisions (e.g., advanced LTE project, ultramobile broadband (UMB) project (also referred to as "3GPP2"), etc.). IEEE 802.16 compatible Broadband Wireless Access (BWA) networks are generally referred to as WiMAX networks, an acronym that stands for worldwide interoperability for microwave access, which is a certification mark for products that pass conformity and interoperability tests for the IEEE 802.16 standards. The communication device 1112 may operate in accordance with a Global System for Mobile Communication (GSM), General Packet Radio Service (GPRS), Universal Mobile Telecommunications System (UMTS), High Speed Packet Access (HSPA), Evolved HSPA (E-HSPA), or LTE network. The communication device 1112 may operate in accordance with Enhanced Data for GSM Evolution (EDGE), GSM EDGE Radio Access Network (GERAN), Universal Terrestrial Radio Access Network (UTRAN), or Evolved UTRAN (E-UTRAN). The communication device 1112 may operate in accordance with Code-division Multiple Access (CDMA), Time Division Multiple Access (TDMA), Digital Enhanced Cordless Telecommunications (DECT), Evolution-Data Optimized (EV-DO), and derivatives thereof, as well as any other wireless protocols that are designated as 3G, 4G, 5G, and beyond. The communication device 1112 may operate in accordance with other wireless protocols in other embodiments. The computing device 1100 may include an antenna 1122 to facilitate wireless communications and/or to receive other wireless communications (such as radio frequency transmissions). The computing device 1100 may include receiver circuits and/or transmitter circuits. In some embodiments, the communication device 1112 may manage wired communications, such as electrical, optical, or any other suitable communication protocols (e.g., the Ethernet). As noted above, communication device 1112 may include multiple communication chips. For instance, a first communication device 1112 may be dedicated to shorter-range wireless communications such as Wi-Fi or Bluetooth, and a second communication device 1112 may be dedicated to longer-range wireless communications such as global positioning system (GPS), EDGE, GPRS, CDMA, WiMAX, LTE, EV-DO, or others. In some embodiments, a first communication device 1112 may be dedicated to wireless communications, and a second communication device 1112 may be dedicated to wired communications.

The computing device 1100 may include power source / power circuitry 1114. The power source / power circuitry 1114 may include one or more energy storage devices (e.g., batteries or capacitors) and/or circuitry for coupling components of the computing device 1100 to an energy source separate from the computing device 1100 (e.g., DC power, AC power, etc.).

The computing device 1100 may include a display device 1106 (or corresponding interface circuitry, as discussed above). Display device 1106 may include any visual indicators, such as a heads-up display, a computer monitor, a projector, a touchscreen display, a liquid crystal display (LCD), a light-emitting diode display, or a flat panel display, for example.

The computing device 1100 may include an audio output device 1108 (or corresponding interface circuitry, as discussed above). The audio output device 1108 may include any device that generates an audible indicator, such as speakers, headsets, or earbuds, for example.

The computing device 1100 may include an audio input device 1118 (or corresponding interface circuitry, as discussed above). The audio input device 1118 may include any device that generates a signal representative of a sound, such as microphones, microphone arrays, or digital instruments (e.g., instruments having a musical instrument digital interface (MIDI) output).

The computing device 1100 may include a GPS device 1116 (or corresponding interface circuitry, as discussed above). The GPS device 1116 may be in communication with a satellite-based system and may receive a location of the computing device 1100, as known in the art.

The computing device 1100 may include a sensor 1130 (or one or more sensors). The computing device 1100 may include corresponding interface circuitry, as discussed above). Sensor 1130 may sense physical phenomenon and translate the physical phenomenon into electrical signals that can be processed by, e.g., processing device 1102. Examples of sensor 1130 may include: capacitive sensor, inductive sensor, resistive sensor, electromagnetic field sensor, light sensor, camera, imager, microphone, pressure sensor, temperature sensor, vibrational sensor, accelerometer, gyroscope, strain sensor, moisture sensor, humidity sensor, distance sensor, range sensor, time-of-flight sensor, pH sensor, particle sensor, air quality sensor, chemical sensor, gas sensor, biosensor, ultrasound sensor, a scanner, etc.

The computing device 1100 may include another output device 1110 (or corresponding interface circuitry, as discussed above). Examples of the other output device 1110 may include an audio codec, a video codec, a printer, a wired or wireless transmitter for providing information to other devices, haptic output device, gas output device, vibrational output device, lighting output device, home automation controller, or an additional storage device.

The computing device 1100 may include another input device 1120 (or corresponding interface circuitry, as discussed above). Examples of the other input device 1120 may include an accelerometer, a gyroscope, a compass, an image capture device, a keyboard, a cursor control device such as a mouse, a stylus, a touchpad, a bar code reader, a Quick Response (QR) code reader, any sensor, or a radio frequency identification (RFID) reader.

The computing device 1100 may have any desired form factor, such as a handheld or mobile computer system (e.g., a cell phone, a smart phone, a mobile internet device, a music player, a tablet computer, a laptop computer, a netbook computer, a personal digital assistant (PDA), an ultramobile personal computer, a remote control, wearable device, headgear, eyewear, footwear, electronic clothing, etc.), a desktop computer system, a server or other networked computing component, a printer, a scanner, a monitor, a set-top box, an entertainment control unit, a vehicle control unit, a digital camera, a digital video recorder, an Internet-of-Things device (e.g., light bulb, cable, power plug, power source, lighting system, audio assistant, audio speaker, smart home device, smart thermostat, camera monitor device, sensor device, smart home doorbell, motion sensor device), a virtual reality system, an augmented reality system, a mixed reality system, or a wearable computer system. In some embodiments, the computing device 1100 may be any other electronic device that processes data.

### Select examples

Example 1 provides a method including creating a first processing thread in an operating system of an electronic system; submitting, to a thread watchdog manager, a first request to watch the first processing thread; and queuing one or more first tasks to the first processing thread; where: the first request includes a first response fidelity; and the thread watchdog manager causes a hardware watchdog to reboot the electronic system if the first processing thread fails to meet the first response fidelity.

Example 2 provides the method of example 1, where the first request includes a Boolean flag indicating whether the first processing thread is allowed to terminate.

Example 3 provides the method of example 1 or 2, where the first response fidelity includes a first response time interval that the first processing thread is to meet to prevent rebooting of the electronic system.

Example 4 provides the method of any one of examples 1-3, further including submitting, to the thread watchdog manager, a second request to cease watching the first processing thread.

Example 5 provides the method of any one of examples 1-4, further including submitting, to the thread watchdog manager, a third request to watch the first processing thread, where the third request includes a second response fidelity that is different from the first response fidelity; and queuing one or more second tasks to the first processing thread.

Example 6 provides the method of any one of examples 1-5, further including creating a second processing thread in the operating system of the electronic system; submitting, to the thread watchdog manager, a fourth request to watch the second processing thread, where the fourth request includes a third response fidelity; and queuing one or more third tasks to the second processing thread.

Example 7 provides a method including receiving a first request to watch a first processing thread in an operating system of an electronic system, where the first request includes a first response fidelity; setting a first loop timer to expire at a first expiration time, and to cause a hardware watchdog to execute a reboot of the electronic system upon an expiration of the first loop timer; queuing a first reverse tickle task to the first processing thread, where the first reverse tickle task, when executed by a processor of the electronic system, resets the first loop timer to queue a second reverse tickle task upon the expiration of the first loop timer instead of causing the hardware watchdog to execute the reboot; in response to the first loop timer expiring at the first expiration time before the first reverse tickle task executes, causing the hardware watchdog to reboot the electronic system upon the expiration of the first loop timer; and in response to the first loop timer expiring at the first expiration time after the first reverse tickle task executes, queuing the second reverse tickle task to the first processing thread and resetting the first loop timer to cause the hardware watchdog to execute the reboot upon a next expiration of the first loop timer.

Example 8 provides the method of example 7, where the first expiration time is shorter than the first response fidelity.

Example 9 provides the method of example 7, where the first expiration time is the same as the first response fidelity.

Example 10 provides the method of any one of examples 7-9, further including receiving a second request to cease watching the first processing thread; and turning off the first loop timer.

Example 11 provides the method of any one of examples 7-10, further including receiving a second request to watch a second processing thread in the operating system of the electronic system, where the second request includes a second response fidelity; setting a second loop timer to expire at a second expiration time, and to cause a hardware watchdog to execute the reboot of the electronic system upon an expiration of the second loop timer; and queuing a third reverse tickle task to the second processing thread, where the third reverse tickle task, when executed by the processor of the electronic system, resets the second loop timer to queue a fourth reverse tickle task upon the expiration of the second loop timer instead of causing the hardware watchdog to execute the reboot.

Example 12 provides the method of example 11, further including in response to the second loop timer expiring at the second expiration time before the third reverse tickle task executes, causing the hardware watchdog to reboot the electronic system upon the expiration of the second loop timer; and in response to the second loop timer expiring at the second expiration time after the third reverse tickle task executes, queuing the fourth reverse tickle task to the second processing thread and resetting the second loop timer to cause the hardware watchdog to execute the reboot upon a next expiration of the second loop timer.

Example 13 provides the method of any one of examples 7-12, where: the first request includes a Boolean flag indicating that the first processing thread is allowed to terminate; and the method further includes, in response to the first loop timer expiring at the first expiration time after the first processing thread has terminated, turning off the first loop timer.

Example 14 provides the method of any one of examples 7-12, where: the first request includes a Boolean flag indicating that the first processing thread is not allowed to terminate; and the method further includes, in response to the first loop timer expiring at the first expiration time after the first processing thread has terminated, causing the hardware watchdog to reboot the electronic system.

Example 15 provides a method including receiving a first request to watch a first processing thread in an operating system of an electronic system, where the first request includes a first response fidelity; setting a first loop timer to expire at a first expiration time corresponding to the first response fidelity, and to cause a hardware watchdog to execute a reboot of the electronic system upon an expiration of the first loop timer; queuing a first reverse tickle task to the first processing thread, where the first reverse tickle task is executable by a processor of the electronic system; and setting a queue time to a kernel time of the operating system of the electronic system.

Example 16 provides the method of example 15, further including in response to the first loop timer expiring at the first expiration time before the first reverse tickle task executes, causing the hardware watchdog to reboot the electronic system upon the expiration of the first loop timer.

Example 17 provides the method of example 15 or 16, further including in response to the first loop timer expiring at the first expiration time after the first reverse tickle task executes, queuing a second reverse tickle task to the first processing thread and resetting the first loop timer to cause the hardware watchdog to execute the reboot upon a next expiration of the first loop timer.

Example 18 provides the method of any one of examples 15-17, where executing the first reverse tickle task further includes setting a response time to a further kernel time of the operating system of the electronic system; and determining a duration based on the response time and the queue time.

Example 19 provides the method of example 18, where executing the first reverse tickle task further includes in response to determining the duration is greater than the first response fidelity, causing a hardware watchdog to reboot the electronic system.

Example 20 provides the method of example 18 or 19, where executing the first reverse tickle task further includes in response to determining the duration is less than the first response fidelity, resetting the first loop timer to queue a second reverse tickle task upon the expiration of the first loop timer instead of causing the hardware watchdog to execute the reboot.

Example 21 provides the method of any one of examples 15-20, further including in response to the first loop timer expiring at the first expiration time before the first reverse tickle task executes, causing the hardware watchdog to reboot the electronic system.

Example 22 provides an electronic system including one or more processors; and one or more non-transitory computer-readable memories to store instructions, where the instructions, when executed by the one or more processors, cause the one or more processors to: create a first processing thread in an operating system of the electronic system; submit, to a thread watchdog manager, a first request to watch the first processing thread; and queue one or more first tasks to the first processing thread; where: the first request includes a first response fidelity; and the thread watchdog manager causes a hardware watchdog to reboot the electronic system if the first processing thread fails to meet the first response fidelity.

Example 23 provides the electronic system of example 22, where the first request includes a Boolean flag indicating whether the first processing thread is allowed to terminate.

Example 24 provides the electronic system of example 22 or 23, where the first response fidelity includes a first response time interval that the first processing thread is to meet to prevent rebooting of the electronic system.

Example 25 provides the electronic system of any one of examples 22-24, where the instructions further cause the one or more processors to: submit, to the thread watchdog manager, a second request to cease watching the first processing thread.

Example 26 provides the electronic system of any one of examples 22-25, where the instructions further cause the one or more processors to: submit, to the thread watchdog manager, a third request to watch the first processing thread, where the third request includes a second response fidelity that is different from the first response fidelity; and queue one or more second tasks to the first processing thread.

Example 27 provides the electronic system of any one of examples 22-26, where the instructions further cause the one or more processors to: create a second processing thread in the operating system of the electronic system; submit, to the thread watchdog manager, a fourth request to watch the second processing thread, where the fourth request includes a third response fidelity; and queue one or more third tasks to the second processing thread.

Example 28 provides an electronic system including one or more processors; and one or more non-transitory computer-readable memories to store instructions, where the instructions, when executed by the one or more processors, cause the one or more processors to: receive a first request to watch a first processing thread in an operating system of the electronic system, where the first request includes a first response fidelity; set a first loop timer to expire at a first expiration time, and to cause a hardware watchdog to execute a reboot of the electronic system upon an expiration of the first loop timer; queue a first reverse tickle task to the first processing thread, where the first reverse tickle task, when executed by the one or more processors, resets the first loop timer to queue a second reverse tickle task upon the expiration of the first loop timer instead of causing the hardware watchdog to execute the reboot; in response to the first loop timer expiring at the first expiration time before the first reverse tickle task executes, cause the hardware watchdog to reboot the electronic system upon the expiration of the first loop timer; and in response to the first loop timer expiring at the first expiration time after the first reverse tickle task executes, queue the second reverse tickle task to the first processing thread and reset the first loop timer to cause the hardware watchdog to execute the reboot upon a next expiration of the first loop timer.

Example 29 provides the electronic system of example 28, where the first expiration time is shorter than the first response fidelity.

Example 30 provides the electronic system of example 28, where the first expiration time is the same as the first response fidelity.

Example 31 provides the electronic system of any one of examples 28-30, where the instructions further cause the one or more processors to: receive a second request to cease watching the first processing thread; and turn off the first loop timer.

Example 32 provides the electronic system of any one of examples 28-31, where the instructions further cause the one or more processors to: receive a second request to watch a second processing thread in the operating system of the electronic system, where the second request includes a second response fidelity; set a second loop timer to expire at a second expiration time, and to cause a hardware watchdog to execute the reboot of the electronic system upon an expiration of the second loop timer; and queue a third reverse tickle task to the second processing thread, where the third reverse tickle task, when executed by the one or more processors, resets the second loop timer to queue a fourth reverse tickle task upon the expiration of the second loop timer instead of causing the hardware watchdog to execute the reboot.

Example 33 provides the electronic system of example 32, where the instructions further cause the one or more processors to: in response to the second loop timer expiring at the second expiration time before the third reverse tickle task executes, cause the hardware watchdog to reboot the electronic system upon the expiration of the second loop timer; and in response to the second loop timer expiring at the second expiration time after the third reverse tickle task executes, queue the fourth reverse tickle task to the second processing thread and reset the second loop timer to cause the hardware watchdog to execute the reboot upon a next expiration of the second loop timer.

Example 34 provides the electronic system of any one of examples 28-33, where: the first request includes a Boolean flag indicating that the first processing thread is allowed to terminate; and the instructions further cause the one or more processors to, in response to the first loop timer expiring at the first expiration time after the first processing thread has terminated, turn off the first loop timer.

Example 35 provides the electronic system of any one of examples 28-33, where: the first request includes a Boolean flag indicating that the first processing thread is not allowed to terminate; and the instructions further cause the one or more processors to, in response to the first loop timer expiring at the first expiration time after the first processing thread has terminated, cause the hardware watchdog to reboot the electronic system.

Example 36 provides an electronic system, including one or more processors; and one or more non-transitory computer-readable memories to store instructions, where the instructions, when executed by the one or more processors, cause the one or more processors to: receive a first request to watch a first processing thread in an operating system of the electronic system, where the first request includes a first response fidelity; set a first loop timer to expire at a first expiration time corresponding to the first response fidelity, and to cause a hardware watchdog to execute a reboot of the electronic system upon an expiration of the first loop timer; queue a first reverse tickle task to the first processing thread, where the first reverse tickle task is executable by the one or more processors; and set a queue time to a kernel time of the operating system of the electronic system.

Example 37 provides the electronic system of example 36, where the instructions further cause the one or more processors to: in response to the first loop timer expiring at the first expiration time before the first reverse tickle task executes, cause the hardware watchdog to reboot the electronic system upon the expiration of the first loop timer.

Example 38 provides the electronic system of example 36 or 37, where the instructions further cause the one or more processors to: in response to the first loop timer expiring at the first expiration time after the first reverse tickle task executes, queue a second reverse tickle task to the first processing thread and reset the first loop timer to cause the hardware watchdog to execute the reboot upon a next expiration of the first loop timer.

Example 39 provides the electronic system of any one of examples 36-38, where executing the first reverse tickle task further includes setting a response time to a further kernel time of the operating system of the electronic system; and determining a duration based on the response time and the queue time.

Example 40 provides the electronic system of example 39, where executing the first reverse tickle task further includes in response to determining the duration is greater than the first response fidelity, causing a hardware watchdog to reboot the electronic system.

Example 41 provides the electronic system of example 39 or 40, where executing the first reverse tickle task further includes in response to determining the duration is less than the first response fidelity, resetting the first loop timer to queue a second reverse tickle task upon the expiration of the first loop timer instead of causing the hardware watchdog to execute the reboot.

Example 42 provides the electronic system of any one of examples 36-41, where the instructions further cause the one or more processors to: in response to the first loop timer expiring at the first expiration time before the first reverse tickle task executes, cause the hardware watchdog to reboot the electronic system.

Example 43 provides one or more non-transitory computer-readable media storing instructions that, when executed by one or more processors, cause the one or more processors to: create a first processing thread in an operating system of an electronic system; submit, to a thread watchdog manager, a first request to watch the first processing thread; and queue one or more first tasks to the first processing thread; where: the first request includes a first response fidelity; and the thread watchdog manager causes a hardware watchdog to reboot the electronic system if the first processing thread fails to meet the first response fidelity.

Example 44 provides the one or more non-transitory computer-readable media of example 43, where the first request includes a Boolean flag indicating whether the first processing thread is allowed to terminate.

Example 45 provides the one or more non-transitory computer-readable media of example 43 or 44, where the first response fidelity includes a first response time interval that the first processing thread is to meet to prevent rebooting of the electronic system.

Example 46 provides the one or more non-transitory computer-readable media of any one of examples 43-45, where the instructions further cause the one or more processors to: submit, to the thread watchdog manager, a second request to cease watching the first processing thread.

Example 47 provides the one or more non-transitory computer-readable media of any one of examples 43-46, where the instructions further cause the one or more processors to: submit, to the thread watchdog manager, a third request to watch the first processing thread, where the third request includes a second response fidelity that is different from the first response fidelity; and queue one or more second tasks to the first processing thread.

Example 48 provides the one or more non-transitory computer-readable media of any one of examples 43-47, where the instructions further cause the one or more processors to: create a second processing thread in the operating system of the electronic system; submit, to the thread watchdog manager, a fourth request to watch the second processing thread, where the fourth request includes a third response fidelity; and queue one or more third tasks to the second processing thread.

Example 49 provides one or more non-transitory computer-readable media storing instructions that, when executed by one or more processors, cause the one or more processors to: receive a first request to watch a first processing thread in an operating system of an electronic system, where the first request includes a first response fidelity; set a first loop timer to expire at a first expiration time, and to cause a hardware watchdog to execute a reboot of the electronic system upon an expiration of the first loop timer; queue a first reverse tickle task to the first processing thread, where the first reverse tickle task, when executed by a processor of the electronic system, resets the first loop timer to queue a second reverse tickle task upon the expiration of the first loop timer instead of causing the hardware watchdog to execute the reboot; in response to the first loop timer expiring at the first expiration time before the first reverse tickle task executes, cause the hardware watchdog to reboot the electronic system upon the expiration of the first loop timer; and in response to the first loop timer expiring at the first expiration time after the first reverse tickle task executes, queue the second reverse tickle task to the first processing thread and reset the first loop timer to cause the hardware watchdog to execute the reboot upon a next expiration of the first loop timer.

Example 50 provides the one or more non-transitory computer-readable media of example 49, where the first expiration time is shorter than the first response fidelity.

Example 51 provides the one or more non-transitory computer-readable media of example 49, where the first expiration time is the same as the first response fidelity.

Example 52 provides the one or more non-transitory computer-readable media of any one of examples 49-51, where the instructions further cause the one or more processors to: receive a second request to cease watching the first processing thread; and turn off the first loop timer.

Example 53 provides the one or more non-transitory computer-readable media of any one of examples 49-52, where the instructions further cause the one or more processors to: receive a second request to watch a second processing thread in the operating system of the electronic system, where the second request includes a second response fidelity; set a second loop timer to expire at a second expiration time, and to cause a hardware watchdog to execute the reboot of the electronic system upon an expiration of the second loop timer; and queue a third reverse tickle task to the second processing thread, where the third reverse tickle task, when executed by the processor of the electronic system, resets the second loop timer to queue a fourth reverse tickle task upon the expiration of the second loop timer instead of causing the hardware watchdog to execute the reboot.

Example 54 provides the one or more non-transitory computer-readable media of example 53, where the instructions further cause the one or more processors to: in response to the second loop timer expiring at the second expiration time before the third reverse tickle task executes, cause the hardware watchdog to reboot the electronic system upon the expiration of the second loop timer; and in response to the second loop timer expiring at the second expiration time after the third reverse tickle task executes, queue the fourth reverse tickle task to the second processing thread and reset the second loop timer to cause the hardware watchdog to execute the reboot upon a next expiration of the second loop timer.

Example 55 provides the one or more non-transitory computer-readable media of any one of examples 49-54, where: the first request includes a Boolean flag indicating that the first processing thread is allowed to terminate; and instructions further cause the one or more processors to, in response to the first loop timer expiring at the first expiration time after the first processing thread has terminated, turn off the first loop timer.

Example 56 provides the one or more non-transitory computer-readable media of any one of examples 49-54, where: the first request includes a Boolean flag indicating that the first processing thread is not allowed to terminate; and instructions further cause the one or more processors to, in response to the first loop timer expiring at the first expiration time after the first processing thread has terminated, cause the hardware watchdog to reboot the electronic system.

Example 57 provides one or more non-transitory computer-readable media storing instructions that, when executed by one or more processors, cause the one or more processors to: receive a first request to watch a first processing thread in an operating system of an electronic system, where the first request includes a first response fidelity; set a first loop timer to expire at a first expiration time corresponding to the first response fidelity, and to cause a hardware watchdog to execute a reboot of the electronic system upon an expiration of the first loop timer; queue a first reverse tickle task to the first processing thread, where the first reverse tickle task is executable by a processor of the electronic system; and set a queue time to a kernel time of the operating system of the electronic system.

Example 58 provides the one or more non-transitory computer-readable media of example 57, where the instructions further cause the one or more processors to: in response to the first loop timer expiring at the first expiration time before the first reverse tickle task executes, cause the hardware watchdog to reboot the electronic system upon the expiration of the first loop timer.

Example 59 provides the one or more non-transitory computer-readable media of example 57 or 58, where the instructions further cause the one or more processors to: in response to the first loop timer expiring at the first expiration time after the first reverse tickle task executes, queue a second reverse tickle task to the first processing thread and reset the first loop timer to cause the hardware watchdog to execute the reboot upon a next expiration of the first loop timer.

Example 60 provides the one or more non-transitory computer-readable media of any one of examples 57-59, where executing the first reverse tickle task further includes setting a response time to a further kernel time of the operating system of the electronic system; and determining a duration based on the response time and the queue time.

Example 61 provides the one or more non-transitory computer-readable media of example 60, where executing the first reverse tickle task further includes in response to determining the duration is greater than the first response fidelity, causing a hardware watchdog to reboot the electronic system.

Example 62 provides the one or more non-transitory computer-readable media of example 60 or 61, where executing the first reverse tickle task further includes in response to determining the duration is less than the first response fidelity, resetting the first loop timer to queue a second reverse tickle task upon the expiration of the first loop timer instead of causing the hardware watchdog to execute the reboot.

Example 63 provides the one or more non-transitory computer-readable media of any one of examples 57-62, where the instructions further cause the one or more processors to: in response to the first loop timer expiring at the first expiration time before the first reverse tickle task executes, cause the hardware watchdog to reboot the electronic system.

Example A provides one or more non-transitory computer-readable media storing instructions that, when executed by one or more processors, cause the one or more processors to perform any one of the methods described herein.

Example B provides an apparatus comprising means to carry out or means for carrying out any one of the methods provided in examples 1-21 and/or any one of the methods described herein.

Example C provides a computer-implemented system, comprising one or more processors, and one or more non-transitory computer-readable media storing instructions that, when executed by the one or more processors, cause the one or more processors to perform any one of the methods provided in examples 1-21 and/or any one of the methods described herein.

Example D provides a computer-implemented system comprising one or more components illustrated in FIG. 1 to perform operations described herein.

Example E provides a computing device comprising one or more components illustrated in FIG. 11 to perform operations described herein.

### Variations and other notes

The description of illustrated implementations of the disclosure, including what is described in the Abstract, is not intended to be exhaustive or to limit the disclosure to the precise forms disclosed. While specific implementations of, and examples for, the disclosure are described herein for illustrative purposes, various equivalent modifications are possible within the scope of the disclosure, as those skilled in the relevant art will recognize. These modifications may be made to the disclosure in light of the above detailed description.

For purposes of explanation, specific numbers, materials and configurations are set forth in order to provide a thorough understanding of the illustrative implementations. However, it will be apparent to one skilled in the art that the present disclosure may be practiced without the specific details and/or that the present disclosure may be practiced with only some of the described aspects. In other instances, well known features are omitted or simplified in order not to obscure the illustrative implementations.

Further, references are made to the accompanying drawings that form a part hereof, and in which are shown, by way of illustration, embodiments that may be practiced. It is to be understood that other embodiments may be utilized, and structural or logical changes may be made without departing from the scope of the present disclosure. Therefore, the above detailed description is not to be taken in a limiting sense.

Various operations may be described as multiple discrete actions or operations in turn, in a manner that is most helpful in understanding the disclosed subject matter. However, the order of description should not be construed as to imply that these operations are necessarily order dependent. In particular, these operations may not be performed in the order of presentation. Operations described may be performed in a different order from the described embodiment. Various additional operations may be performed or described operations may be omitted in additional embodiments.

For the purposes of the present disclosure, the phrase "A or B" or the phrase "A and/or B" means (A), (B), or (A and B). For the purposes of the present disclosure, the phrase "A, B, or C" or the phrase "A, B, and/or C" means (A), (B), (C), (A and B), (A and C), (B and C), or (A, B, and C). The term "between," when used with reference to measurement ranges, is inclusive of the ends of the measurement ranges.

The description uses the phrases "in an embodiment" or "in embodiments," which may each refer to one or more of the same or different embodiments. The terms "comprising," "including," "having," and the like, as used with respect to embodiments of the present disclosure, are synonymous. The disclosure may use perspective-based descriptions such as "above," "below," "top," "bottom," and "side" to explain various features of the drawings, but these terms are simply for ease of discussion, and do not imply a desired or required orientation. The accompanying drawings are not necessarily drawn to scale. Unless otherwise specified, the use of the ordinal adjectives "first," "second," and "third," etc., to describe a common object, merely indicates that different instances of like objects are being referred to and are not intended to imply that the objects so described must be in a given sequence, either temporally, spatially, in ranking or in any other manner.

In the detailed description, various aspects of the illustrative implementations will be described using terms commonly employed by those skilled in the art to convey the substance of their work to others skilled in the art.

The terms "substantially," "close," "approximately," "near," and "about," generally refer to being within +/- 20% of a target value as described herein or as known in the art. Similarly, terms indicating orientation of various elements, e.g., "coplanar," "perpendicular," "orthogonal," "parallel," or any other angle between the elements, generally refer to being within +/- 5-20% of a target value as described herein or as known in the art.

In addition, the terms "comprise," "comprising," "include," "including," "have," "having" or any other variation thereof, are intended to cover a non-exclusive inclusion. For example, a method, process, or device, that comprises a list of elements is not necessarily limited to only those elements but may include other elements not expressly listed or inherent to such method, process, or device. Also, the term "or" refers to an inclusive "or" and not to an exclusive "or."

The systems, methods and devices of this disclosure each have several innovative aspects, no single one of which is solely responsible for all desirable attributes disclosed herein. Details of one or more implementations of the subject matter described in this specification are set forth in the description and the accompanying drawings.

## Claims

1. A method comprising:
receiving a first request to watch a first processing thread in an operating system of an electronic system, wherein the first request comprises a first response fidelity;
setting a first loop timer to expire at a first expiration time, and to cause a hardware watchdog to execute a reboot of the electronic system upon an expiration of the first loop timer;
queuing a first reverse tickle task to the first processing thread, wherein the first reverse tickle task, when executed by a processor of the electronic system, resets the first loop timer to queue a second reverse tickle task upon the expiration of the first loop timer instead of causing the hardware watchdog to execute the reboot;
in response to the first loop timer expiring at the first expiration time before the first reverse tickle task executes, causing the hardware watchdog to reboot the electronic system upon the expiration of the first loop timer; and
in response to the first loop timer expiring at the first expiration time after the first reverse tickle task executes, queuing the second reverse tickle task to the first processing thread and resetting the first loop timer to cause the hardware watchdog to execute the reboot upon a next expiration of the first loop timer.

2. The method of claim 1, wherein the first expiration time is shorter than the first response fidelity.

3. The method of claim 1, wherein the first expiration time is the same as the first response fidelity.

4. The method of any one of claims 1-3, further comprising:
receiving a second request to cease watching the first processing thread; and
turning off the first loop timer.

5. The method of any one of claims 1-4, further comprising:
receiving a second request to watch a second processing thread in the operating system of the electronic system, wherein the second request comprises a second response fidelity;
setting a second loop timer to expire at a second expiration time, and to cause a hardware watchdog to execute the reboot of the electronic system upon an expiration of the second loop timer; and
queuing a third reverse tickle task to the second processing thread, wherein the third reverse tickle task, when executed by the processor of the electronic system, resets the second loop timer to queue a fourth reverse tickle task upon the expiration of the second loop timer instead of causing the hardware watchdog to execute the reboot.

6. The method of claim 5, further comprising:
in response to the second loop timer expiring at the second expiration time before the third reverse tickle task executes, causing the hardware watchdog to reboot the electronic system upon the expiration of the second loop timer; and
in response to the second loop timer expiring at the second expiration time after the third reverse tickle task executes, queuing the fourth reverse tickle task to the second processing thread and resetting the second loop timer to cause the hardware watchdog to execute the reboot upon a next expiration of the second loop timer.

7. The method of any one of claims 1-6, wherein:
the first request comprises a Boolean flag indicating that the first processing thread is allowed to terminate; and
the method further comprises, in response to the first loop timer expiring at the first expiration time after the first processing thread has terminated, turning off the first loop timer.

8. The method of any one of claims 1-6, wherein:
the first request comprises a Boolean flag indicating that the first processing thread is not allowed to terminate; and
the method further comprises, in response to the first loop timer expiring at the first expiration time after the first processing thread has terminated, causing the hardware watchdog to reboot the electronic system.

9. An electronic system comprising:
one or more processors; and
one or more non-transitory computer-readable memories to store instructions, wherein the instructions, when executed by the one or more processors, cause the one or more processors to perform a method according to any one of claims 1-8.

10. One or more non-transitory computer-readable media storing instructions that, when executed by one or more processors, cause the one or more processors to perform a method according to any one of claims 1-8.
